(19) Europäisches Patentamt
European Patent Office
Office européen des brevets

(11) **EP 4 332 126 A1**

(12) **EUROPEAN PATENT APPLICATION**
published in accordance with Art. 153(4) EPC

(43) Date of publication:
**06.03.2024 Bulletin 2024/10**

(51) International Patent Classification (IPC):
**C08F 8/12** *(2006.01)* **C08F 16/06** *(2006.01)*

(21) Application number: **22795738.8**

(52) Cooperative Patent Classification (CPC):
**C08F 8/12; C08F 16/06**

(22) Date of filing: **25.04.2022**

(86) International application number:
**PCT/JP2022/018771**

(87) International publication number:
**WO 2022/230825 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2021 JP 2021075374**

(71) Applicant: **Kuraray Co., Ltd.**
**Kurashiki-shi, Okayama 710-0801 (JP)**

(72) Inventors:
• FUJIMORI Misuzu
**Kurashiki-shi, Okayama 713-8550 (JP)**
• TAOKA Yuta
**Kurashiki-shi, Okayama 713-8550 (JP)**
• JIKIHARA Atsushi
**Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **VINYL ALCOHOL-BASED POLYMER, POWDER CONTAINING SAME, METHOD FOR PRODUCING POWDER, COATING AGENT, COATED PRODUCT, METHOD FOR PRODUCING COATED PRODUCT, STABILIZER FOR EMULSION POLYMERIZATION, AQUEOUS EMULSION, AND ADHESIVE AGENT**

(57) A vinyl alcohol polymer including a structural unit derived from at least one selected from the group consisting of: a monomer having a carboxy group; and a derivative of the monomer, wherein the vinyl alcohol polymer has a minimum degree of branching of 0.93 or less within a range of an absolute molecular weight being 200,000 or more and 800,000 or less, and an insoluble content of a mixture prepared by adding 4 parts by mass of the vinyl alcohol polymer to 96 parts by mass of water followed by stirring at 60 °C for 1 hour is 0.1 ppm or more and less than 2,000 ppm.

FIG. 2

EP 4 332 126 A1

**Description**

[TECHNICAL FIELD]

The present invention relates to: a vinyl alcohol polymer; a powder containing the same; a method for producing a powder; a coating agent; a coated article; a method for producing a coated article; a stabilizer for emulsion polymerization; an aqueous emulsion; and an adhesive.

[BACKGROUND ART]

A vinyl alcohol polymer (hereinafter, may be referred to as "PVA") is known as a water-soluble synthetic polymer, and used for a wide range of intended usages such as paper processing, fiber processing, adhesives, emulsion stabilizers for polymerization and suspension polymerization, binders for inorganic substances, and films.

As one type of modified PVAs, a PVA including a structural unit derived from a carboxylic acid or a derivative thereof has been known (see Patent Document 1). Taking advantage of reactivity and the like of the carboxylic acid, such a PVA has been used for: a sizing agent of acidic paper containing aluminum sulfate; a water-resistant coating film being combined with a crosslinking agent; an adhesive; and the like. In addition, due to water solubility being favorable, the PVA is useful also for water-soluble films for packaging of pesticides, laundry detergents, industrial chemicals, and the like, and thus has been widely utilized. Furthermore, with regard to an adhesive in which the PVA is utilized, Patent Document 2 discloses a tacky adhesive composition containing an alkyl-modified PVA having viscosity falling in a certain range, and a (meth)acrylic emulsion.

[PRIOR ART DOCUMENTS]

[Patent Documents]

Patent Document 1: PCT International Publication No. 2018/061272
Patent Document 2: Japanese Unexamined Patent Application, Publication No. H10-265754

[SUMMARY OF THE INVENTION]

[Problems to Be Solved by the Invention]

In a usage purpose involving application of a solution containing a PVA, such as a coating agent, an adhesive, or the like, coating characteristics thereof, such as less spattering of a coating liquid during coating, formation of a film having little coating unevenness and high uniformity being enabled, and the like, are required to be favorable. Furthermore, in an adhesive containing the conventional PVA as well, improvements are required in such points as occurrence of coating streaks and splashing (spattering of the adhesive) during roll coating.

The present invention was made for solving the aforementioned problems, and an object of the invention is to provide: a PVA having favorable coating characteristics; a powder containing such a PVA; a method for forming this powder; and a coating agent, a coated article, and a method for producing a coated article in which the PVA is utilized. Furthermore, it is also an object of the present invention to provide an adhesive resulting in fewer occurrences of coating streaks and less splashing during roll coating, and a stabilizer for emulsion polymerization and an aqueous emulsion which enable obtaining such an adhesive.

[Means for Solving the Problems]

The foregoing problems can be solved by any of the following:

(1) A PVA including a structural unit derived from at least one selected from the group consisting of: a monomer having a carboxy group; and a derivative of the monomer, wherein the PVA has a minimum degree of branching of 0.93 or less within a range of an absolute molecular weight being 200,000 or more and 800,000 or less, and an insoluble content of a mixture prepared by adding 4 parts by mass of the PVA to 96 parts by mass of water followed by stirring at 60 °C for 1 hour is 0.1 ppm or more and less than 2,000 ppm;
(2) The PVA according to (1), wherein a viscosity-average degree of polymerization is 300 or more and 5,000 or less;
(3) The PVA according to (1) or (2), wherein the at least one selected from the group consisting of: a monomer having a carboxy group; and a derivative of the monomer is at least one selected from the group consisting of an ethylenic unsaturated dicarboxylic acid, a monoester of an ethylenic unsaturated dicarboxylic acid, a diester of an ethylenic unsaturated dicarboxylic acid, and an anhydride of an ethylenic unsaturated dicarboxylic acid;

(4) The PVA according to (1) or (2), wherein the at least one selected from the group consisting of: a monomer having a carboxy group; and a derivative of the monomer is at least one selected from the group consisting of maleic acid, a maleic acid monoalkyl ester, a maleic acid dialkyl ester, maleic anhydride, fumaric acid, a fumaric acid monoalkyl ester, and a fumaric acid dialkyl ester;

(5) The PVA according to any one of (1) to (4), which satisfies the following inequality (I):

$$S \times P > 250 \qquad (I)$$

wherein, in the inequality (I), S represents a percentage content (mol%), with respect to total structural units, of the structural unit derived from at least one selected from the group consisting of: the monomer having a carboxy group; and the derivative of the monomer; and P represents the viscosity-average degree of polymerization;

(6) The PVA according to any one of (1) to (5), which satisfies the following inequality (II):

$$1.0 < g_A/g_B < 3.0 \qquad (II)$$

wherein, in the inequality (II), $g_A$ represents a degree of branching of the PVA having an absolute molecular weight of 200,000; and $g_B$ represents a degree of branching of the PVA having an absolute molecular weight of 800,000;

(7) The PVA according to any one of (1) to (6), wherein a degree of saponification is 65 mol% or more and 99 mol% or less;

(8) A powder containing the PVA according to any one of (1) to (7);

(9) The powder according to (8), wherein a percentage content of the powder capable of passing through a sieve having a mesh opening size of 180 $\mu$m is 12% by mass or less;

(10) The powder according to (8) or (9), wherein a percentage content of the powder capable of passing through a sieve having a mesh opening size of 1.00 mm is 97% by mass or more, and a percentage content of the powder capable of passing through a sieve having a mesh opening size of 500 $\mu$m is 40% by mass or more;

(11) A method for producing a powder containing a PVA, the method including: a step (1) of obtaining a copolymer of a vinyl ester with at least one selected from the group consisting of: a monomer having a carboxy group; and a derivative of the monomer; a step (2) of obtaining a saponification product of the copolymer; and a step (3) of subjecting the saponification product to a heat treatment, wherein in the saponification product upon completion of the step (3), a percentage content of the powder capable of passing through a sieve having a mesh opening size of 180 $\mu$m is 12% by mass or less;

(12) The method for producing a powder according to (11), wherein, in the step (3), a heat treatment temperature is 110 °C or more, and a heat treatment time period is 1 hour or more;

(13) A coating agent containing the PVA according to any one of claims 1 to 7;

(14) A coated article containing: a base; and the coating agent according to (13) applied on the base;

(15) The coated article according to (14), which is a thermosensitive recording material;

(16) The coated article according to (14), which is a base paper for a release paper;

(17) The coated article according to (14), which is an oil-resistant paper;

(18) The coated article according to (14), which is an inkjet recording material;

(19) The coated article according to (14), which is a gas barrier paper or a flavor barrier paper;

(20) The coated article according to (14), which is a white paperboard.

(21) A method for producing a coated article, the method including applying the coating agent according to (13) on a base by using a curtain coater;

(22) A stabilizer for emulsion polymerization, the stabilizer containing the PVA according to any one of (1) to (7);

(23) An aqueous emulsion containing: the stabilizer for emulsion polymerization according to (22); and a polymer including an ethylenic unsaturated monomer unit; and

(24) An adhesive containing the aqueous emulsion according to (23).

[Effects of the Invention]

The present invention enables providing a PVA having favorable coating characteristics, a powder containing such a PVA, a method for forming this powder, and a coating agent, a coated article, and a method for producing a coated article in which the PVA is utilized. Furthermore, the present invention enables providing an adhesive resulting in fewer occurrences of coating streaks and less spattering during roll coating, and a stabilizer for emulsion polymerization and an aqueous emulsion which enable obtaining such an adhesive.

[BRIEF DESCRIPTION OF THE DRAWINGS]

FIG. 1 is a graph showing a relationship between each absolute molecular weight and each intrinsic viscosity ([η]branch and [η]linear) of PVA-3 and PVA-17 in Examples;
FIG. 2 is a graph showing a relationship between the absolute molecular weight and the degree of branching (gm) of PVA-3 in Examples; and
FIG. 3 is a drawing which describes a method for evaluating spattering (splashing) in

EXAMPLES.

[DESCRIPTION OF EMBODIMENTS]

Hereinafter, embodiments for carrying out the present invention are described. It is to be noted that in the present specification, upper limit values and lower limit values of ranges of numerical values (contents of components, values and physical properties calculated from components, etc.) can be combined as appropriate.

PVA

The PVA (vinyl alcohol polymer) of the present invention is a PVA including a structural unit derived from at least one selected from the group consisting of: a monomer having a carboxy group; and a derivative of the monomer, wherein the PVA has: a minimum degree of branching of 0.93 or less within a range of an absolute molecular weight being 200,000 or more and 800,000 or less. An insoluble content of a mixture prepared by adding 4 parts by mass of the PVA to 96 parts by mass of water followed by stirring at 60 °C for 1 hour is 0.1 ppm or more and less than 2,000 ppm.

The PVA has favorable coating characteristics at a time of preparing an aqueous solution and applying. Furthermore, the coating agent containing the PVA inhibits occurrence of defects even in a case of conducting applying at high speed, and is therefore superior in coating characteristics. Although the reasons for achieving such effects are not clarified, it is speculated as follows. As described in detail later, a degree of branching of a polymeric molecule is a marker which represents a degree of branched structures of the polymeric molecule in a range of 0 to 1, and the value being smaller indicates the branched structures being more numerous. The PVA has a minimum degree of branching of 0.93 or less within a range of an absolute molecular weight being 200,000 or more and 800,000 or less, whereby sufficient branched structures are formed. Consequently, a value of a first normal stress difference in a case in which an aqueous solution of the PVA is prepared is low. Normal stress as referred is stress which, when a rotational deformation has been applied to a measurement subject which is a viscoelastic fluid, occurs in a direction perpendicular to a direction in which shearing force has been applied. An aqueous solution having a small first normal stress difference has a tendency for spattering and coating unevenness to be decreased at the time of coating. Furthermore, in the PVA, insoluble content, which is another factor which generates spattering and coating unevenness at the time of coating, is low. It is speculated that since the PVA thus has sufficient branched structures and has low insoluble content, the coating characteristics are favorable when the PVA is made into an aqueous solution and applied.

The PVA of the present invention includes: a vinyl alcohol unit; and a structural unit derived from at least one selected from the group consisting of a monomer having a carboxy group, and a derivative of the monomer. Hereinafter, the "at least one selected from the group consisting of: a monomer having a carboxy group; and a derivative of the monomer" may be referred to as "monomer (a)". The PVA is obtained, typically, by subjecting a vinyl ester polymer including the structural unit derived from the monomer (a) (a copolymer of the monomer (a) and a vinyl ester) to saponification. The derivative of the monomer having a carboxy group is exemplified by esters, anhydrides, etc., of the monomer having a carboxy group. The carboxy group (-COOH) may be present in a state of a salt (-COONa, etc.). The structural unit derived from the monomer (a) may form a cross-linked structure and bond to an other structural unit. The monomer (a) is exemplified by an ethylenic unsaturated monocarboxylic acid, an ethylenic unsaturated dicarboxylic acid, and derivatives of these.

Examples of the ethylenic unsaturated monocarboxylic acid and the derivative thereof include acrylic acid, methacrylic acid, methyl acrylate, ethyl acrylate, methyl methacrylate, ethyl methacrylate, and the like.

The ethylenic unsaturated dicarboxylic acid and the derivative thereof are exemplified by ethylenic unsaturated dicarboxylic acids, a monoester thereof, a diester thereof, an anhydride thereof, and the like. Examples of the ethylenic unsaturated dicarboxylic acid include maleic acid, fumaric acid, citraconic acid, mesaconic acid, itaconic acid, and the like. Examples of the monoester of the ethylenic unsaturated dicarboxylic acid include monoalkyl unsaturated dicarboxylic acid esters such as monomethyl maleate, monoethyl maleate, monomethyl fumarate, monoethyl fumarate, monomethyl citraconate, monoethyl citraconate, monomethyl mesaconate, monoethyl mesaconate, monomethyl itaconate, and monoethyl itaconate. Examples of the diester of the ethylenic unsaturated dicarboxylic acid include dialkyl unsaturated dicarboxylic acid esters such as dimethyl maleate, diethyl maleate, dimethyl fumarate, diethyl fumarate, dimethyl citraconate, diethyl citraconate, dimethyl mesaconate, diethyl mesaconate, dimethyl itaconate, and diethyl itaconate. Examples of the anhydride of the ethylenic unsaturated dicarboxylic acid include maleic anhydride, citraconic anhydride, and the like.

In light of industrial availability, reactivity with a vinyl ester, and the like, the monomer (a) is preferably the ethylenic unsaturated dicarboxylic acid, and a monoester of the ethylenic unsaturated dicarboxylic acid, a diester of the ethylenic unsaturated dicarboxylic acid, and an anhydride of the ethylenic unsaturated dicarboxylic acid, more preferably maleic acid, a maleic acid monoalkyl ester, a maleic acid dialkyl ester, maleic anhydride, fumaric acid, a fumaric acid monoalkyl ester, and a fumaric acid dialkyl ester, and particularly preferably monomethyl maleate, dimethyl maleate, maleic anhydride, monomethyl fumarate, and dimethyl fumarate. One type, or two or more types of the monomer (a) may be used.

The lower limit of a percentage content of (S) of the structural unit derived from the monomer (a) with respect to total structural units of the PVA of the present invention is preferably 0.1 mol%, more preferably 0.5 mol%, still more preferably 1.0 mol%, and particularly preferably 1.5 mol%. On the other hand, the upper limit of the percentage content of (S) is preferably 15 mol%, more preferably 10 mol%, and still more preferably 5 mol%, and may be even more preferably 3 mol%. When the percentage content of (S) falls within the above range, effects achievable by modification with carboxylic acid, i.e., effects of introduction of the structural unit derived from the monomer (a) can be sufficiently exerted, and coating characteristics can be further enhanced. In addition, due to the percentage content of (S) being the aforementioned upper limit or less, excessive forming of crosslinking can be inhibited. In a part where the excessive crosslinking occurs, solubility in water decreases, thereby yielding insoluble matter. Thus, due to the moisture content (S) being the aforementioned upper limit or less, insoluble matter tends to decrease. The percentage content of (S) can be determined by a $^1$H-NMR analysis of a vinyl ester polymer before saponification of the PVA of the present invention.

The PVA of the present invention has the minimum degree of branching of 0.93 or less, within a range of an absolute molecular weight being 200,000 or more and 800,000 or less. The degree of branching as referred to herein means a marker representing an extent of a branched structure(s) of a polymer, and provided that the degree of branching of a linear polymer, i.e., a polymer not having a branched structure, is 1, a value closer to 0 indicates many branched structure(s) being included. With respect to a PVA as a subject of the measurement, the degree of branching for each absolute molecular weight in the range of the absolute molecular weight being 200,000 or more and 800,000 or less is determined. Then, the smallest degree of branching in the above range is defined as the minimum degree of branching. It is to be noted that in a case in which the absolute molecular weight of a PVA does not distribute over the entire range of 200,000 or more and 800,000 or less, for example, also in a case of including only a PVA having an absolute molecular weight of 600,000 or less, or the like, the smallest degree of branching in the range of the absolute molecular weight being 200,000 or more and 600,000 or less is defined as the minimum degree of branching. In other words, although the PVA of the present invention consisting of a plurality of molecules includes molecules having an absolute molecular weight falling within the range of 200,000 or more and 800,000 or less, the absolute molecular weight may not be distributed over the entire range of 200,000 or more and 800,000 or less.

The degree of branching $g_m$ in each absolute molecular weight of the PVA of the present invention is determined with the following equalities (1) and (2).

$$g_m{}' = [\eta]_{branch}/[\eta]_{linear} \qquad (1)$$

$$g_m = g_m{}'^{\,(1/\varepsilon)} \qquad (2)$$

In the equality (1), $[\eta]_{branch}$ represents an intrinsic viscosity of the PVA of the present invention with a branched structure (branched PVA), having an absolute molecular weight x (wherein x is 200,000 or more and 800,000 or less), and is a value calculated from a differential refractive index detector, a light scattering detector, and a viscosity detector. $[\eta]_{linear}$ is an intrinsic viscosity of the linear PVA having the above absolute molecular weight x, and is similarly a value calculated from a differential refractive index detector, a light scattering detector, and a viscosity detector. It is to be noted that as the linear PVA, an unmodified PVA (a saponification product of a homopolymer of vinyl acetate) is used, a viscosity of a 4% by mass aqueous solution of which accounts for within ±20% of the viscosity of a 4% by mass aqueous solution of the PVA of the present invention to be a subject of the measurement, and a degree of saponification of which accounts for within ±3 mol% of the PVA of the present invention. The intrinsic viscosity of the PVA of the present invention and the linear PVA having each absolute molecular weight can be measured specifically, by a method described in Examples. A relationship between the degree of branching $g_m$ and the ratio $g_m'$ of the intrinsic viscosity represented by the above equality (1) is as represented by the above equality (2). In the equality (2), $\varepsilon$ represents a structure factor, wherein $\varepsilon$ is 0.7.

In the PVA of the present invention, the minimum degree of branching is 0.93 or less, whereby a sufficient branched structure (crosslinking) has been formed. Thus, according to the PVA of the present invention, the first normal stress difference in a case of preparing an aqueous solution can be decreased, and spattering of the coating liquid and coating unevenness at the time of coating can be reduced. In order to enhance such an effect, the upper limit of the minimum degree of branching is preferably 0.85 and more preferably 0.6, and may be still more preferably 0.4, 0.25, or 0.18.

On the other hand, the lower limit of the minimum degree of branching may be, for example, 0.01 or 0.05, may be preferably 0.15, and may be more preferably 0.20. When the minimum degree of branching is more than or equal to the lower limit, the insoluble content, which is generated due to, e.g., crosslinking being excessively formed, can be lessened, whereby the coating characteristics and the like can be enhanced.

The branching in the PVA is presumed to be formed by a heat treatment through, for example formation of an ester bond between the hydroxy group and the carboxy group included in the PVA, and the like. Thus, the minimum degree of branching can be adjusted by: heat treatment conditions such as a heat treatment temperature and a heat treatment time period; the percentage content of the structural unit derived from the monomer (a); the degree of saponification; and the like.

The PVA of the present invention includes the PVA having an absolute molecular weight within the range of 200,000 or more and 800,000 or less. In addition, the PVA of the present invention includes preferably the PVA having an absolute molecular weight being 200,000, and the having an absolute molecular weight being 800,000, and it is more preferred that the absolute molecular weight is distributed over the entire range of at least 200,000 or more and 800,000 or less.

The upper limit of a viscosity-average degree of polymerization (P) of the PVA of the present invention may be, for example, 8,000, and is preferably 5,000, and more preferably 4,000. On the other hand, the lower limit of the viscosity-average degree of polymerization (P) may be, for example, 100 or 200, and is preferably 300, more preferably 400, and still more preferably 500 or 1,000. In the case in which the viscosity-average degree of polymerization (P) falls within the above range, coating characteristics and the like tend to be further enhanced. The viscosity-average degree of polymerization (P) is a value measured in accordance with JIS K6726: 1994, and specifically, can be determined by a method described in EXAMPLES.

The lower limit of a percentage content of the vinyl alcohol unit with respect to total structural units in the PVA of the present invention is preferably 35 mol%, more preferably 50 mol%, still more preferably 70 mol%, and may be even more preferably 80 mol% or 85 mol%. On the other hand, the upper limit of the percentage content of the vinyl alcohol unit is preferably 99.9 mol%, and more preferably 99 mol%.

The lower limit of the degree of saponification of the PVA of the present invention is preferably 65 mol%, more preferably 80 mol%, and still more preferably 85 mol%. When the degree of saponification is the aforementioned lower limit or more, water solubility is enhanced and insoluble matter decreases, whereby coating characteristics and the like can be further enhanced. On the other hand, the upper limit of the degree of saponification may be 100 mol%, and is preferably 99 mol%, more preferably 95 mol%, and still more preferably 92 mol%. When the degree of saponification is the aforementioned upper limit or less, a sufficient branched structure tends to be more readily formed by the heat treatment. The degree of saponification is a value measured by a method described in JIS K6726: 1994.

The PVA of the present invention preferably satisfies the following inequality (I).

$$S \times P > 250 \qquad (\text{I})$$

In the inequality (I), S represents a percentage content of (mol%) of the structural unit derived from the monomer (a) with respect to total structural units; and P represents the viscosity-average degree of polymerization.

In the case in which the inequality (I) is satisfied, an extent of effects resulting from modification with the carboxylic acid (formation of a branched structure, and the like), and an extent of effects resulting from the degree of polymerization may be balanced, whereby coating characteristics and the like may be further improved. Specifically, in the case in which, for example, the inequality (I) is satisfied, coating unevenness upon applying may be further inhibited and strength of a coating film to be obtained tends to be enhanced. The lower limit of "$S \times P$" is more preferably 300, and may be still more preferably 400, 500, 600, or 700. On the other hand, the upper limit of "$S \times P$" is preferably 4,000, more preferably 3,000, still more preferably 2,000, and even more preferably 1,500.

In regard to the degree of branching, the PVA of the present invention preferably satisfies the inequality (ii), and more preferably satisfies the inequality (II).

$$1.0 < g_A/g_B < 5.0 \qquad \text{(ii)}$$

$$1.0 < g_A/g_B < 3.0 \qquad \text{(II)}$$

In the inequality (ii) and the inequality (II), $g_A$ represents a degree of branching of the vinyl alcohol polymer having an absolute molecular weight of 200,000 (a degree of branching of PVA having an absolute molecular weight of 200,000, of the PVA of the present invention); and $g_B$ represents a degree of branching of the vinyl alcohol polymer having an absolute molecular weight of 800,000 (a degree of branching of PVA having an absolute molecular weight of 800,000, of the PVA of the present invention).

As described above, crosslinking proceeds by way of a sufficient heat treatment, whereby PVA having a minimum degree of branching being small can be obtained. However, if the degree of crosslinking is accompanied by nonuniformity due to the difference in the molecular weight, PVA (in general, a component having a molecular weight being large) in which crosslinking excessively occurs is likely to be insoluble in water, and affects coating characteristics of the aqueous solution. Further, when the nonuniformity of crosslinking is great due to the difference in the molecular weight, the ratio $g_A/g_B$ becomes greater. From this point of view, the ratio $g_A/g_B$ is more preferably less than 2.7.

An insoluble content of a mixture prepared by adding 4 parts by mass of the PVA of the present invention to 96 parts by mass of water followed by stirring at 60 °C for 1 hour is 0.1 ppm or more and less than 2,000 ppm. The insoluble content is preferably less than 1,750 ppm, and more preferably less than 1,600 ppm. When the insoluble content is thus low, the coating characteristics and the like can be improved. On the other hand, the insoluble content may be 1 ppm or more, or may be 10 ppm or more or 100 ppm or more. It is to be noted that the "ppm" is on mass basis, and the insoluble content (ppm) indicates the proportion of the insoluble matter contained in the PVA. The insoluble content, specifically, can be determined by a method described in Examples.

The value of the ratio $g_A/g_B$, and the content of the insoluble matter tend to increase as a proportion of the PVA, in which excessive crosslinking has occurred through being excessively heated, increases. Thus, as described later, the ratio $g_A/g_B$ and the proportion of the insoluble matter contained can be lowered by: upon subjecting the saponification product of the vinyl ester polymer (copolymer) to a heat treatment, fine powder which is likely to be excessively heated is eliminated beforehand; carrying out the heat treatment while eliminating the fine powder; eliminating the fine powder after the heat treatment; and/or the like.

The PVA of the present invention may include other structural unit(s) aside from: the vinyl alcohol unit; a vinyl ester unit; and the structural unit derived from the monomer (a). Examples of monomers that give the other structural unit include: $\alpha$-olefins such as ethylene, propylene, 1-butene, isobutene, and 1-hexene; acrylamide derivatives such as N-methylacrylamide, N-ethylacrylamide, and 2-acrylamide-2-methylpropane sulfonate; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl acetate; 3,4-diacetoxy-1-butene; allyl ethers such as propyl allyl ether, butyl allyl ether, and hexyl allyl ether; monomers each having an oxyalkylene group; hydroxy group-containing $\alpha$-olefins such as 3-buten-1-ol, 4-penten-1-ol, 5-hexen-1-ol, 7-octen-1-ol, 9-decen-1-ol, and 3-methyl-3-buten-1-ol; monomers each having a silyl group such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like.

The upper limit of a percentage content of the other structural unit with respect to the total structural units of the PVA of the present invention may be preferably 20 mol%, may be more preferably 10 mol%, and may be still more preferably 3 mol%, 1 mol%, or 0.1 mol%. For example, in a case in which the percentage content of a structural unit derived from an $\alpha$-olefin as the other structural unit is high, when an aqueous solution of the PVA is prepared, foaming may be likely to occur. Thus, when the percentage content of the other structural unit with respect to the total structural units of the PVA is less than or equal to the upper limit, the coating characteristics may be more enhanced. On the other hand, the lower limit of the percentage content of the other structural unit may be, for example, 0.1 mol%, or may be 1 mol%.

Furthermore, the PVA of the present invention is relatively unlikely to be influenced by pH, and is expected to exhibit favorable coating characteristics even under an acidic condition or an alkaline condition.

Powder

The powder of the present invention is a powder containing the PVA of the present invention. Since the powder contains the PVA of the present invention, the coating characteristics in a case of application upon being dissolved in water are favorable.

In the powder of the present invention, the PVA of the present invention is typically contained as a principal component. The principal component as referred to herein means a component having the highest content on a mass basis. The lower limit of a content of the PVA of the present invention with respect to nonvolatile components of the powder of the present invention is preferably 50% by mass, more preferably 70% by mass, and still more preferably 90% by mass, and may be even more preferably 99% by mass. The upper limit of a content of the PVA of the present invention with respect to nonvolatile components of the powder of the present invention may be 100% by mass. The nonvolatile component(s) other than the PVA of the present invention which may be included in the powder of the present invention is/are exemplified by: a PVA other than the PVA of the present invention; a resin other than PVAs; an additive such as a surfactant and a plasticizer; each compound used in production; and the like. In addition, a content of volatile components in the powder of the present invention is typically 20% by mass or less, preferably 15% by mass or less, and more preferably 10% by mass or less. The volatile component(s) which may be included in the powder of the present invention is/are exemplified by an alcohol, water, and the like. The powder of the present invention may be the powder of the PVA of the present invention.

In the powder of the present invention, the upper limit of a percentage content of the powder (fine powder) capable of passing through a sieve having a mesh opening size of 180 μm is preferably 12% by mass, and may be more preferably 10% by mass, 8% by mass, or 5% by mass. As described above, the fine powder is likely to be excessively heated by the heat treatment, leading to crosslinking proceeding too much, whereby insoluble matter is likely to be generated. Therefore, when the percentage content of the powder capable of passing through a sieve having a mesh opening size of 180 μm is the aforementioned upper limit or less, the insoluble matter decreases, whereby coating characteristics and the like in the case of being prepared as the aqueous solution may improve. It is to be noted that the lower limit of a percentage content of the powder capable of passing through a sieve having a mesh opening size of 180 μm may be 0.1% by mass, or may be 1% by mass. The mesh opening size of the sieve conforms to nominal mesh opening size W in accordance with JIS Z 8801-1-2006 (the same applying to the following description).

In the powder of the present invention, it is preferred that a percentage content of the powder capable of passing through a sieve having a mesh opening size of 1.00 mm is 97% by mass or more, and a percentage content of the powder capable of passing through a sieve having a mesh opening size of 500 μm is 40% by mass or more. The lower limit of the percentage content of the powder capable of passing through a sieve having a mesh opening size of 1.00 mm is more preferably 98% by mass, and still more preferably 99% by mass. On the other hand, the upper limit of the percentage content of the powder capable of passing through a sieve having a mesh opening size of 1.00 mm may be 100% by mass, or may be 99.9% by mass. The upper limit of the percentage content of the powder capable of passing through a sieve having a mesh opening size of 500 μm may be 70% by mass, or may be 60% by mass. In the case in which the powder of the present invention has such a size, coating characteristics in the case of being prepared as the aqueous solution, and the like may improve due to a lower amount of coarse powder, uniformity of the particle diameter being superior, and the like.

Particle size distribution in the powder of the present invention can be adjusted by sieving during or after production, and the like.

An insoluble content of a mixture prepared by adding 4 parts by mass of the powder of the present invention to 96 parts by mass of water followed by stirring at 60 °C for 1 hour is preferably 0.1 ppm or more and less than 2,000 ppm. The insoluble content is more preferably less than 1,750 ppm, and still more preferably less than 1,600 ppm. When the insoluble content is thus low, coating characteristics of the aqueous solution obtained from the powder of the present invention, and the like can be improved. On the other hand, the insoluble content may be 1 ppm or more, or may be 10 ppm or more or 100 ppm or more. Measurement of insoluble content of the powder can be conducted similarly to the measurement of the insoluble content of the PVA.

Intended Usages of PVA and Powder

The PVA and the powder of the present invention can be used for a variety of intended usages, which are similar to those of conventional PVAs and powders. These intended usages are exemplified below, but are not limited thereto.

(1) Vinyl chloride dispersant usages: dispersion stabilizers and dispersion aids for suspension polymerization of vinyl chloride or vinylidene chloride
(2) Coating material usages: sizing agents, fiber processing agents, leather finishers, paints, anti-fogging agents, metal corrosion inhibitors, gloss agents for galvanized material, and antistatic agents
(3) Adhesive/binder usages: adhesives, agglutinants, remoistenable adhesives, various binders, and additives for cements, mortars, etc.
(4) Agricultural usages: binders for pesticides, spreaders for pesticides, agricultural coating materials, soil improving agents, erosion inhibitors, and dispersants for pesticides
(5) Medical/cosmetic usages: granulate binders, coating agents, emulsifying agents, skin patches, binding agents, bases for film formulations, and film-forming agents

(6) Aggregating agent usages: agents for aggregating solids suspended in water and for dissolved matter, and metal aggregating agents

(7) Film usages: water-soluble films, polarized films, barrier films, films for wrapping textile products, seed germination sheets, vegetation sheets, seed tapes, and hygroscopic film

(8) Molded article usages: fibers, pipes, tubes, anti-leak films, water-soluble fibers for chemical laces, and sponges

(9) Usages as raw materials for resins: raw materials for polyvinyl butyral, raw materials for photosensitive resins, raw materials for graft polymers, and raw materials for various gels

(10) Post-reaction usages: post-reaction usages with low-molecular organic compounds, high-molecular organic compounds, and inorganic compounds

(12) Dispersants for emulsion polymerization: dispersants for emulsion polymerization of a vinyl acetate emulsion, and dispersants for emulsion polymerization of ethylene-vinyl acetate

(13) Paper processing agents: surface sizing agents for general paper, wood fillers for release paper, overcoating agents for thermal paper, and silica binders for ink jet paper

The PVA and the powder of the present invention have favorable coating characteristics in the case of preparing an aqueous solution. Thus, they are particularly suitable for an intended usage of being dissolved in water and applied. Examples of such an intended usage include adhesives, films (film-forming solutions), and the like. In other words, an aqueous solution containing the PVA of the present invention, an adhesive containing the PVA of the present invention, a film containing the PVA of the present invention, and the like are also suitable modes of the present invention. A content of the PVA of the present invention in the aqueous solution, the adhesive, the film-forming solution, and the like is, for example, 1% by mass or more and 30% by mass or less, may be 5% by mass or more and 20% by mass or less, or may be 10% by mass or more. Other component(s) aside from the PVA of the present invention and water may be contained in the aqueous solution, the adhesive, the film-forming solution, and the like. Examples of such other component(s) include components contained in conventionally well-known adhesives, film-forming solutions, and the like.

Methods for Producing PVA and Powder

The method for producing the PVA or the powder of the present invention is not particularly limited, and the following method is preferred. More specifically, the method for producing the PVA or the powder of the present invention includes:

a step (1) of obtaining a copolymer of a vinyl ester with the monomer (a);
a step (2) of obtaining a saponification product of the copolymer; and
a step (3) of subjecting the saponification product to a heat treatment.

Step (1)

In the step (1), a copolymer of a vinyl ester with the monomer (a) is obtained. Specific examples and preferred examples of the monomer (a) are as described above. Examples of the vinyl ester monomer include vinyl formate, vinyl acetate, vinyl propionate, vinyl valerate, vinyl caprate, vinyl laurate, vinyl stearate, vinyl benzoate, vinyl pivalate, vinyl versatate, and the like. Of these, vinyl acetate is preferred.

The procedure of polymerization is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent and the solution polymerization procedure performed with a solvent such as an alcohol or the like are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed.

An initiator to be used in the polymerization reaction is exemplified by well-known initiators, e.g., azo initiators such as 2,2'-azobisisobutyronitrile, 2,2'-azobis(2,4-dimethylvaleronitrile), and 2,2'-azobis(4-methoxy-2,4-dimethylvaleronitrile); organic peroxide initiators such as benzoyl peroxide and n-propyl peroxycarbonate; and the like. A polymerization temperature at a time of conducting the polymerization reaction is not particularly limited, and a range of 5 °C or higher and 200 °C or lower is appropriate.

In copolymerizing the vinyl ester with the monomer (a), copolymerizable monomer(s) can be further copolymerized within a range not impairing the principles of the present invention. Specific examples of such other monomer(s) are as described above, in terms of the monomer that gives the other structural unit.

In the copolymerization, a chain transfer agent may also be present for the purpose of adjusting the degree of polymerization of the resulting PVA, and the like. Examples of the chain transfer agent include: aldehydes such as acetaldehyde, propionaldehyde, butyraldehyde, and benzaldehyde; ketones such as acetone, methyl ethyl ketone, hexanone, and cyclohexanone; mercaptans such as 2-hydroxyethanethiol and 3-mercaptopropionic acid; thiocarboxylic acids such as thioacetic acid; halogenated hydrocarbons such as trichloroethylene and perchloroethylene; and the like. Of these, the aldehydes and the ketones are particularly suitably used. An amount of the chain transfer agent to be added is determined according to the chain transfer constant of the chain transfer agent to be added and the target degree of polymerization of the PVA. Typically, the amount is preferably 0.1 to 10% by mass with respect to the vinyl ester to be used.

Step (2)

In the step (2), the copolymer (vinyl ester polymer) obtained in the step (1) is saponified in a solution using an alkali catalyst or an acid catalyst to give the saponification product. For the saponification reaction, an alcoholysis or hydrolysis reaction using a conventionally well-known basic catalyst such as sodium hydroxide, potassium hydroxide, or sodium methoxide, or an acid catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or in a combination of two or more types thereof. Of these, due to convenience, it is preferable to use methanol or a mixed solution of methanol and methyl acetate as the solvent, and to conduct the saponification reaction in the presence of sodium hydroxide, which serves as the basic catalyst.

The saponification reaction can be conducted using a belt type reactor, a kneader type reactor, a tower type reactor, or the like. A temperature at which saponification is conducted is not particularly limited, and is preferably 20 °C or higher and 60 °C or lower. In a case in which a gelatinous product emerges to deposit as the saponification proceeds, it is preferred that the product is pulverized and the saponification is allowed to further proceed. Thereafter, a resultant solution is neutralized to terminate the saponification and washed, whereby a saponification product can be obtained. A procedure for the saponification is not limited to the procedure described above, and a well-known procedure can be employed.

Step (3)

In the step (3), the saponification product obtained after the step (2) is subjected to a heat treatment. The heat treatment is preferably carried out in an air atmosphere or a nitrogen atmosphere. The heat treatment is preferably carried out on the saponification product of a solid form, and more preferably a powder form (particulate form). The saponification product may be preliminarily dried, and the saponification product from which a certain level of volatile matter has been removed may be subjected to the heat treatment. The heat treatment may be carried out while stirring the saponification product. The heat treatment can be carried out by using, for example, a cylindrical agitating dryer, or the like.

In the method for producing the powder of the present invention, a percentage content of the powder capable of passing through a sieve having a mesh opening size of 180 $\mu$m is 12% by mass or less, in the saponification product upon completion of the step (3). The upper limit of the percentage content of the powder capable of passing through a sieve having a mesh opening size of 180 $\mu$m may be preferably 10% by mass, 8% by mass or 5% by mass. When the amount of the fine powder which is likely to be excessively heated is thus decreased, PVA powder in which formation of excessive crosslinking is inhibited, to include less insoluble matter can be efficiently obtained.

A procedure for adjusting the percentage content of the powder capable of passing through a sieve having a mesh opening size of 180 $\mu$m to be 12% by mass or less, in the saponification product upon completion of the step (3) is exemplified by: a procedure of screening the saponification product, followed by carrying out the heat treatment; a procedure of carrying out the heat treatment while eliminating the fine powder generated; and the like. For example, the heat treatment may be carried out multiple times, and the fine powder may be eliminated by sieving between each heat treatment. Alternatively, the fine powder may be eliminated after the heat treatment.

In one mode of the method for producing the PVA or the powder of the present invention, the heat treatment is preferably carried out with a heat treatment temperature of 110 °C or higher and a heat treatment time period of 1 hour or longer. By carrying out the heat treatment under such a condition, a sufficient crosslinking reaction is caused, whereby the PVA having a minimum degree of branching of 0.93 or less can be efficiently obtained. The lower limit of the heat treatment temperature may be 115 °C, or may be 120 °C. Further, the upper limit of the heat treatment temperature may be 150 °C, or may be 140 °C, 130 °C or 125 °C. The lower limit of the heat treatment time period is preferably 2 hrs, more preferably 3 hrs, still more preferably 4 hrs, and even more preferably 5 hrs. Further, the upper limit of the heat treatment time period may be 24 hrs, may be 12 hrs, or may be 8 hrs. When the heat treatment temperature and the heat treatment time period are each of the aforementioned upper limits or less, formation of excessive crosslinking may be inhibited, whereby insoluble matter in the PVA or the powder to be obtained can be decreased.

Between the step (2) and the step (3), a step of pulverizing the saponification product to give a particulate form, a step of screening the saponification product in the particulate form, and/or the like may be provided.

Coating Agent

The coating agent of the present invention contains the PVA of the present invention. The coating agent has favorable coating characteristics, and particularly has favorable coating characteristics even in a case of conducting applying at high speed. For example, the coating agent can exhibit favorable coating characteristics even in a case of conducting coating at a coating speed of more than 800 m/min or 1,000 m/min or more using a curtain coater. The coating agent typically contains water as a solvent or a dispersion medium. The coating agent may contain, as a solvent or a dispersion medium, an organic solvent instead of water or together with water. The upper limit of a content of this organic solvent is, with respect to 100 parts by mass of water, preferably 50 parts by mass, more preferably 30 parts by mass, and may be still more preferably 10 parts by mass, 5 parts by mass, or 1 part by mass. On the other hand, the lower limit of the content is, with respect to 100 parts by mass of water, preferably 0 parts by mass, and may be more preferably 10 parts by mass. The coating agent may not contain the organic solvent.

Examples of the organic solvent include: alcohol solvents such as methanol and ethanol; ester solvents such as methyl acetate and ethyl acetate; ether solvents such as diethyl ether and 1,4-dioxane; ketone solvents such as acetone and diethyl ketone; glycol solvents such as ethylene glycol and propylene glycol; glycol ether solvents such as diethylene glycol monomethyl ether and propylene glycol monomethyl ether; glycol ester solvents such as ethylene glycol monomethyl ether acetate and propylene glycol monomethyl ether acetate; and the like.

The coating agent may further contain other component(s). The other component(s) is/are exemplified by fillers, dispersants, water-soluble polymeric molecules, synthetic resin emulsions, plasticizers, pH adjusting agents, defoaming agents, release agents, surfactants, and the like.

Examples of the fillers include kaolin, clay, calcined clay, calcium carbonate, titanium oxide, diatomaceous earth, aluminum oxide, aluminum hydroxide, synthetic aluminum silicate, synthetic magnesium silicate, fine particles of polystyrene, fine particles of polyvinyl acetate, fine particles of urea-formalin resin, sedimentary silica, gelled silica, silica synthesized by a gas-phase method (hereinafter, referred to as "gas-phase silica"), colloidal silica, colloidal alumina, pseudoboehmite, talc, zeolite, alumina, zinc oxide, satin white, organic pigment, and the like.

Examples of the dispersants include sodium pyrophosphate, sodium hexametaphosphate, sodium polyacrylate, and the like.

Examples of the water-soluble polymeric molecules include PVAs other than the PVA described above, vinyl alcohol-vinyl ester copolymers, polyacrylamides, polyacrylic acids, carboxymethyl cellulose, hydroxyethyl cellulose, hydroxymethyl propyl cellulose, casein, starch such as oxidized starch, and the like.

The synthetic resin emulsions are exemplified by emulsions of a styrene-butadiene copolymer, a polyacrylic acid ester, a polymethacrylic acid ester, a vinyl acetate-ethylene copolymer, and a vinyl acetate-acrylic acid ester copolymer, and the like. In other words, the coating agent may contain these synthetic resins in the form of emulsions.

Examples of the plasticizers include glycols, glycerin, and the like. Examples of the pH adjusting agents include ammonia, caustic soda, carbonate of soda, phosphoric acid, and the like.

A solid content concentration in the coating agent is not particularly limited, and may be appropriately adjusted depending on the intended usage and the like, and taking into consideration the coating characteristics and the like, the solid content concentration is preferably 1% by mass or more and 65% by mass or less. The upper limit of the solid content concentration may be 60% by mass, 50% by mass, 40% by mass, 30% by mass, 20% by mass, or 15% by mass. The lower limit of the solid content concentration may be 3% by mass, 5% by mass, 10% by mass, 20% by mass, or 30% by mass.

A content of the PVA in the solid content of the coating agent may be, for example, 0.1% by mass or more and 100% by mass or less. The upper limit of the content may be 80% by mass, 50% by mass, 30% by mass, or 10% by mass. The lower limit of the content may be 1% by mass, 10% by mass, 30% by mass, or 50% by mass.

Coated Article

The coated article of the present invention is produced by applying the coating agent of the present invention on a base. In other words, the coated article typically includes: a base; and a layer containing the PVA, which is laminated on this base. The base may be impregnated with a part or all of the PVA. The coated article has little coating unevenness. The coated article can be suitably used in, for example, a thermosensitive recording material, a release paper, an oil-resistant paper, an inkjet recording material, a gas barrier paper, a flavor barrier paper, a white paperboard, and/or the like. In the coated article, the coating agent may be applied on only one face of the base, or the coating agent may be applied on both faces thereof.

The base of the coated article may be appropriately selected depending on the intended usage, and is exemplified by a paper, a fabric, a wooden board, a resin plate, and the like. The coated article may be a coated paper in which the base is a paper. Examples of the paper include: boards such as a manila board, a white cardboard, and a liner; printing papers such as a general wood-free paper, a medium quality paper, and a gravure paper; and the like. Examples of the fabric include nonwoven fabrics, woven fabrics, knitted fabrics, and the like. Examples of the wooden board include planks, plywood, glued lamination boards, and the like. Examples of the resin plate include polyvinyl chloride plates, acryl plates, and the like.

The amount of the coating agent to be applied on the base is not particularly limited, and the amount in terms of the solid content on one face of the base is typically about 0.1 g/m$^2$ or more and 100 g/m$^2$ or less, and may be 1 g/m$^2$ or more and 40 g/m$^2$ or less.

Thermosensitive Recording Material

The thermosensitive recording material is a coated article including: a base; and the coating agent of the present invention applied on the base. The base of the thermosensitive recording material is exemplified by the papers exemplified as the base of the coated article, and of these, the printing papers are preferred. Furthermore, a basis weight of the base of the thermosensitive recording material is not particularly limited, and taking into consideration handleability and the like, is preferably 10 g/m$^2$ or more and 100 g/m$^2$ or less, and more preferably 35 g/m$^2$ or more and 80 g/m$^2$ or less. It is to be noted that the basis weight as referred to means mass per unit area.

The coating agent applied to the thermosensitive recording material preferably contains a filler. Furthermore, for the thermosensitive recording material, a solid content concentration of the coating agent to be applied can be appropriately adjusted to a range of, for example, 10% by mass or more and 65% by mass or less.

Base Paper for Release Paper

The base paper for a release paper is a coated article containing: a base; and the coating agent of the present invention applied on the base, wherein the base consists of paper. In the base paper for a release paper, the coating agent forms a wood filler layer. The release paper can be produced by forming, on this wood filler layer, a release layer made of a silicone release agent. Since the coating agent is used in the base paper for a release paper, a highly uniform wood filler layer is formed.

The base of the base paper for a release paper is exemplified by the papers exemplified as the base of the coated article, and the like. A general wood-free paper, a medium quality paper, an alkaline paper, a glassine paper, or a semi-glassine paper is preferred, and a semi-glassine paper is more preferred. Furthermore, as an adhesive constituting an adhesive layer, a well-known adhesive can be used.

A basis weight of the base of the base paper for a release paper is not particularly limited, and considering wood-filling characteristics, handleability, and the like of the base paper for a release paper, is preferably 10 g/m$^2$ or more and 120 g/m$^2$ or less, and more preferably 40 g/m$^2$ or more and 100 g/m$^2$ or less.

For the base paper for release paper, a solid content concentration of the coating agent to be applied is preferably 1% by mass or more and 15% by mass or less, and more preferably 2% by mass or more and 10% by mass or less.

Oil-Resistant Paper

The oil-resistant paper is a coated article containing: a base; and the coating agent of the present invention applied on the base, wherein the base consists of paper. The oil-resistant paper can be suitably used as a packaging material for food products and the like.

The base of the oil-resistant paper is exemplified by the papers exemplified as the base of the coated article, and the like. A general wood-free paper, a medium quality paper, an unbleached kraft paper, a bleached kraft paper, an alkaline paper, a glassine paper, a semi-glassine paper, a base paper for corrugated cardboard, a base paper for white cardboard, a base paper for chipboard, and the like can be suitably used.

A basis weight of the base of the oil-resistant paper is not particularly limited, and considering oil-resistant characteristics and the like, the basis weight is preferably 20 g/m$^2$ or more and 150 g/m$^2$ or less in a case of using the oil-resistant paper as a packaging paper, and preferably 150 g/m$^2$ or more and 500 g/m$^2$ or less in a case of using the oil-resistant paper as a box-shaped formed container.

Inkjet Recording Material

The inkjet recording material is a coated article containing: a base; and the coating agent of the present invention applied on the base. In the inkjet recording material, it is preferred that the coating agent is used as a filler binder in an ink-receiving layer. In this case, the coating agent preferably contains a filler. A content of the filler with respect to 100 parts by mass of the PVA is preferably 50 parts by mass or more and 300 parts by mass or less, and more preferably 80 parts by mass or more and 250 parts by mass or less. The base of the inkjet recording material is exemplified by the papers exemplified as the base of the coated article.

Gas Barrier Paper or Flavor Barrier Paper

The gas barrier paper or the flavor barrier paper is a coated article containing: a base; and the coating agent of the present invention applied on the base, wherein the base consists of paper. In other words, the coating agent can be used as a barrier agent. In this case, the coating agent preferably contains a filler. A content of the filler with respect to total solid content is preferably 3% by mass or more and 95% by mass or less, more preferably 5% by mass or more and 90% by mass or less, and still more preferably 10% by mass or more and 85% by mass or less. Furthermore, in this case, the coating agent preferably contains a binding component other than the PVA, such as a synthetic resin emulsion and/or the like. It is to be noted that the PVA also functions as a binder component. The base of the gas barrier paper or the flavor barrier paper is exemplified by the papers exemplified as the base of the coated article.

The lower limit of an air resistance in the coated article, being the gas barrier paper or the flavor barrier paper, is preferably 500 sec, and more preferably 1,000 sec. In a case in which the air resistance is high, barrier properties against gas and flavor are superior, indicating suitability as the gas barrier paper or the flavor barrier paper. On the other hand, the upper limit of the air resistance may be, for example, 20,000 sec, 10,000 sec, 5,000 sec, or 3,000 sec. The air resistance is a value measured using an Oken-type air permeability tester in accordance with JIS P 8117: 2009. This gas barrier paper or flavor barrier paper is preferably subjected to application of a coating formula further containing a barrier material or the like and adjusted to have an air resistance of 100,000 sec or more for use.

White Paperboard

The white paperboard is a coated article containing: a base; and the coating agent of the present invention applied on the base, wherein the base consists of paperboard. In this case, the coating agent typically contains a white filler (white pigment). A content of the white filler (white pigment) with respect to the total solid content is preferably 30% by mass or more and 95% by mass or less, and more preferably 50% by mass or more and 90% by mass or less.

Method for Producing Coated Article

As a method for producing the coated article of the present invention, a well-known method may be employed. A procedure of applying the coating agent on the base is not particularly limited, and a well-known coater such as a curtain coater, a size press coater, an air knife coater, a blade coater, a roll coater, or the like may be used. Of these, a procedure in which the curtain coater is employed is preferred. In other words, the method for producing the coated article of the present invention includes a step of applying the coating agent on the base by using the curtain coater. An applying speed in the production method may be, for example, 500 m/min or more and 2,000 m/min or less, may be 800 m/min or more and 1,600 m/min or less, may be 900 m/min or more and 1,500 m/min or less, or may be 1,000 m/min or more and 1,300 m/min or less.

The production method may include, after the applying of the coating agent, a step of drying. Furthermore, still other step(s) may be included, such as a calendering step in the case in which the base consists of paper.

Stabilizer for Emulsion Polymerization

The stabilizer for emulsion polymerization of the present invention contains the PVA of the present invention. By using the stabilizer for emulsion polymerization, an adhesive resulting in fewer occurrences of coating streaks and less splashing during roll coating can be obtained. The stabilizer for emulsion polymerization may contain other component(s), such as a surfactant, within a range not impairing the effects of the present invention.

Examples of the surfactant include: anionic surfactants such as alkylnaphthalenesulfonic acid salts and dialkylsulfosuccinic acids; cationic surfactants such as alkylamine salts and lauryltrimethylammonium chloride; nonionic surfactants such as polyoxyethylene alkyl ethers, polyoxyethylene alkylphenyl ethers, and sorbitan fatty acid esters; amphoteric surfactants such as alkylbetaine and amine oxide; polymeric surfactants such as vinyl alcohol polymers other than the PVA of the present invention and hydroxyethyl cellulose; and the like.

Component(s) other than the surfactant may be exemplified by a buffering agent, an agent for adjusting the degree of polymerization, and the like. Examples of the buffering agent include: acids such as acetic acid, hydrochloric acid, and sulfuric acid; bases such as ammonia, amines, caustic soda, caustic potash, and calcium hydroxide; alkali carbonates; phosphates; acetates; and the like. Examples of the agent for adjusting the degree of polymerization include mercaptans, alcohols, and the like.

The lower limit of a content of the PVA of the present invention in the stabilizer for emulsion polymerization may be 10% by mass, or may be 50% by mass, 70% by mass, 80% by mass, 90% by mass, 95% by mass, 99% by mass, or 99.5% by mass. The upper limit of the content may be 100% by mass, or may be 99.99% by mass.

Aqueous Emulsion

The aqueous emulsion of the present invention contains: the stabilizer for emulsion polymerization; and a polymer including an ethylenic unsaturated monomer unit. By using the aqueous emulsion, an adhesive resulting in fewer occurrences of coating streaks and less splashing during roll coating can be obtained. In the aqueous emulsion, the polymer including the ethylenic unsaturated monomer unit is typically contained as a dispersoid. Furthermore, the aqueous emulsion typically contains water as a dispersion medium.

Examples of the ethylenic unsaturated monomer unit included in the polymer include units derived from:

vinyl ester monomers such as vinyl formate, vinyl acetate, vinyl propionate, and vinyl versatate;
(meth)acrylic acid monomers such as acrylic acid and methacrylic acid
(meth)acrylic acid ester monomers such as methyl acrylate, ethyl acrylate, butyl acrylate, 2-ethylhexyl acrylate, dodecyl acrylate, 2-hydroxyethyl acrylate, methyl methacrylate, ethyl methacrylate, butyl methacrylate, 2-ethylhexyl methacrylate, dodecyl methacrylate, 2-hydroxyethyl methacrylate, dimethylaminoethyl acrylate, dimethylaminoethyl methacrylate, and quaternized products thereof;
styrene monomers such as styrene, $\alpha$-methylstyrene, and p-styrenesulfonic acid, and sodium salts and potassium salts thereof;
diene monomers such as butadiene, isoprene, and chloroprene;
olefin monomers such as ethylene, propylene, and isobutylene;
acrylamide monomers such as acrylamide, methacrylamide, N-methylolacrylamide, N,N-dimethylacrylamide, acrylamide-2-methylpropanesulfonic acid, and sodium salts thereof;
halogenated olefins such as vinyl chloride, vinyl fluoride, vinylidene chloride, and vinylidene fluoride; N-vinylpyrrolidone; and the like.

The polymer is preferably a polymer including a monomer unit derived from at least one selected from the group consisting of the vinyl ester monomers, the (meth)acrylic acid ester monomers, the styrene monomers, and the diene monomers. Furthermore, a total content of the vinyl ester monomers, the (meth)acrylic acid ester monomers, the styrene monomers, and the diene monomers with respect to total monomer units in the polymer is preferably 70% by mass or more, and more preferably 75% by mass or more. Of these, the polymer particularly preferably includes the vinyl ester monomer unit at a content of 75% by mass or more with respect to the total monomer units.

A method for producing the aqueous emulsion of the present invention is preferably a method in which the ethylenic unsaturated monomer is subjected to emulsion polymerization using a polymerization initiator in the presence of the stabilizer for emulsion polymerization.

In the method in a case in which the stabilizer for emulsion polymerization is charged into a polymerization reactor, a charging procedure and/or an adding procedure are not particularly limited. Examples may include a procedure in which the stabilizer for emulsion polymerization is added in the polymerization reactor as an initial batch, a procedure in which the stabilizer for emulsion polymerization is continuously added during polymerization, and the like. Of these, in light of increasing a grafting rate of the stabilizer for emulsion polymerization to the ethylenic unsaturated monomer, the procedure in which the stabilizer for emulsion polymerization is added in the polymerization reactor as an initial batch is preferred. At this time, a procedure in which the stabilizer for emulsion polymerization is added to cold water or warm water, being warmed in advance, and the stabilizer for emulsion polymerization is heated to 80 °C or more and 90 °C or less and stirred for uniform dispersion is preferred.

During the emulsion polymerization, the amount of addition of the stabilizer for emulsion polymerization with respect to 100 parts by mass of the ethylenic unsaturated monomer is preferably 0.2 parts by mass or more and 80 parts by mass or less. When the amount of addition of the stabilizer for emulsion polymerization is 0.2 parts by mass or more, aggregation of dispersoid particles in the aqueous emersion is less likely to occur, whereby the polymerization stability when preparing the aqueous emulsion tends to be superior. The amount of addition of the stabilizer for emulsion polymerization is more preferably 0.5 parts by mass or more, still more preferably 1 part by mass or more, particularly preferably 2 parts by mass or more, and most preferably 4 parts by mass or more. On the other hand, in the case in which the amount of addition of the stabilizer for emulsion polymerization is 80 parts by mass or less, there is a tendency for viscosity of the polymerization solution not to increase excessively, whereby there is a tendency for the polymerization to be likely to proceed uniformly, for polymerization heat to be efficiently eliminated, and the like. The amount of addition of the stabilizer for emulsion polymerization is more preferably 60 parts by mass or less, still more preferably 50 parts by mass or less, and particularly preferably 40 parts by mass or less.

As a polymerization initiator in the emulsion polymerization, a water-soluble independent initiator or a water-soluble redox-type initiator, each typically used in emulsion polymerization, can be used. These initiators can each be used alone of one type, or two or more types can be used together. Of these, the redox-type initiator is preferred.

The water-soluble independent initiator is exemplified by: azo-based initiators; peroxides such as hydrogen peroxide and persulfates (potassium, sodium, or ammonium salts); and the like. Examples of the azo-based initiators include 2,2'-azobis(isobutyronitrile), 2,2'-azobis(2,4-dimethylvaleronitrile), 2,2'-azobis(4-methoxy-2,4-dimethylvaleronitrile), and the like.

As the redox-type initiator, an initiator obtained by combining an oxidizing agent and a reducing agent can be used. As the oxidizing agent, a peroxide is preferred. The reducing agent is exemplified by a metal ion, a reducing compound, and the like. Examples of the combination of the oxidizing agent and the reducing agent include: a combination of a peroxide and a metal ion; a combination of a peroxide and reducing compound; and a combination of a peroxide, and a metal ion and a reducing compound. Examples of the peroxide include: hydrogen peroxide; hydroxyperoxides such as cumene hydroxyperoxide and t-butyl hydroxyperoxide; persulfates (potassium, sodium, or ammonium salts); t-butyl peracetic acid; peracid esters (t-butyl perbenzoate); and the like. Examples of the metal ion include metal ions which can receive an electron transfer from $Fe^{2+}$, $Cr^{2+}$, $V^{2+}$, $Co^{2+}$, $Ti^{3+}$, $Cu^{+}$, and the like. Examples of the reducing compound include sodium bisulfite, sodium bicarbonate, tartaric acid, fructose, dextrose, sorbose, inositol, Rongalit, and ascorbic acid. Of these, a combination of: at least one oxidizing agent selected from the group consisting of hydrogen peroxide, potassium persulfate, sodium persulfate, and ammonium persulfate; with at least one reducing agent selected from the group consisting of sodium bisulfite, sodium bicarbonate, tartaric acid, Rongalit, and ascorbic acid is preferred, and a combination of hydrogen peroxide with at least one reducing agent selected from the group consisting of sodium bisulfite, sodium bicarbonate, tartaric acid, Rongalit, and ascorbic acid is more preferred.

At the time of the emulsion polymerization, an alkali metal compound, a surfactant, a buffering agent, an agent for adjusting the degree of polymerization, and/or the like may be appropriately used within a range not impairing the effects of the present invention.

The alkali metal compound is not particularly limited, and examples include compounds including sodium, potassium, rubidium, cesium, and/or the like. The alkali metal compound may be an alkali metal ion per se, or may be a compound containing an alkali metal.

Examples of the buffering agent include: acids such as acetic acid, hydrochloric acid, and sulfuric acid; bases such as ammonia, amines, caustic soda, caustic potash, and calcium hydroxide; alkali carbonates; phosphates; acetates; and the like. Examples of the agent for adjusting the degree of polymerization include mercaptans, alcohols, and the like.

A temperature of the emulsion polymerization is not particularly limited, and is preferably about 20 °C or more and 85 °C or less, and more preferably about 40 °C or more and 85 °C or less.

The aqueous emulsion of the present invention may contain conventionally well-known additive(s), e.g., a filler material such as titanium oxide, an organic solvent such as toluene, a plasticizer such as dibutyl phthalate, and/or a film formation aid such as glycol ether. Furthermore, the aqueous emulsion may be a so-called powder emulsion, being powdered by spray drying or the like. The aqueous emulsion can be obtained by mixing the powder emulsion with water. Such an aqueous emulsion can be suitably used in a wide range of intended usages such as various adhesives, pigments, fiber processing agents, paper processing agents, inorganic binders, cement admixtures, mortar primers, and the like.

Adhesive

The adhesive of the present invention contains the aqueous emulsion of the present invention. The adhesive achieves an effect fewer occurrences of coating streaks and less splashing during roll coating. The adhesive may be an aqueous adhesive. Furthermore, due to, e.g., the PVA in which the percentage content of the above-described other structural unit(s) is low being used, the adhesive of the present invention can be an adhesive in which foaming is less likely to occur and there is less likely to be an influence from pH.

The lower limit of a content of the PVA in the adhesive of the present invention is preferably 0.1% by mass. In the case in which the content of the PVA is 0.1% by mass or more, high-speed coatability, film strength, initial adhesiveness, dynamic water resistance, and acid resistance tend to improve. The lower limit of the content of the PVA is more preferably 1% by mass, still more preferably 3% by mass, particularly 5% by mass, and most preferably 6% by mass. On the other hand, the upper limit of the content of the PVA is preferably 50% by mass. In the case in which the content of the PVA is 50% by mass or less, viscosity of the adhesive becomes appropriate, whereby handling becomes easier. The upper limit of the content of the PVA is more preferably 35% by mass, still more preferably 25% by mass, particularly preferably 18% by mass, and most preferably 13% by mass.

In the adhesive and the aqueous emulsion of the present invention, a mass ratio (A)/(B) of the PVA (A) to the polymer (B) containing the ethylenic unsaturated monomer unit is preferably 2/98 to 80/20. In the case in which the mass ratio (A)/(B) is 2/98 or more, adhesion strength can improve. From this viewpoint, the lower limit of the mass ratio (A)/(B) is more preferably 5/95, and still more preferably 8/92. On the other hand, in the case in which the mass ratio (A)/(B) is 80/20 or less, water-resistant adhesiveness can be favorable. From this viewpoint, the upper limit of the mass ratio (A)/(B) is more preferably 70/30, still more preferably 60/40, and even more preferably 50/50.

The lower limit of solid content in the adhesive of the present invention is preferably 10% by mass, more preferably 20% by mass, still more preferably 25% by mass, and even more preferably 30% by mass. On the other hand, the upper limit of the solid content is preferably 60% by mass, more preferably 55% by mass, and still more preferably 50% by mass. In the case in which the solid content is 10% by mass or more, viscosity stability of the adhesive tends to be superior. On the other hand, in the case in which the solid content is 60% by mass or less, open time tends to be long, wherein the adhesive tends to be superior in handling characteristics.

The adhesive may include any of various additives within a range not impairing the effects of the present invention. Examples of such additives include: inorganic particles of calcium carbonate, clay, kaolinite, talc, titanium oxide, and the like; organic solvents (aromatic compounds such as toluene and xylene, alcohols, ketones, esters, halogen-containing solvents, etc.); crosslinking agents; plasticizers, anti-precipitation agents; thickening agents; flow-improving agents; antiseptic agents; defoaming agents, organic fillers; wetting agents; colorants; binders; water retention agents; polyethylene oxide; mildew-proofing agents; deodorants; fragrances; and the like.

Furthermore, examples of the additives include: dispersants of inorganic substances, e.g., metal salts of phosphoric acid compounds such as sodium polyphosphate and sodium hexametaphosphate, and water glass; polyacrylic acid and salts thereof; sodium alginate; anionic polymeric compounds such as α-olefm-maleic anhydride copolymers and metal salts thereof; surfactants, e.g., nonionic surfactants such as ethylene oxide adducts of higher alcohols and copolymers of ethylene oxide and propylene oxide; and the like. When these are added, fluidity of the adhesive can improve. In order to improve dynamic water resistance, one, or two or more types of crosslinking agents may be selected from the group consisting of water-soluble metal compounds, colloidal inorganic substances, polyamidoamine epichlorohydrin adducts, and glyoxal resins. Here, examples of the water-soluble metal compounds include aluminum chloride, aluminum nitrate, ammonium zirconium carbonate, titanium lactate, and the like. Examples of the colloidal inorganic substances include colloidal silica, alumina sol, and the like. Examples of the polyamidoamine epichlorohydrin adducts include epichlorohydrin added to various polyamidoamines. Examples of the glyoxal resins include a urea-glyoxal resin, and the like. Furthermore, a methylol group-containing compound (resin), an epoxy compound (resin), an aziridine group-containing compound (resin), an oxazoline group-containing compound (resin), a carbodiimide compound, an aldehyde compound (resin), and/or the like may be used together with the crosslinking agents. In order to improve adhesive strength, boric acid; borax; a water-soluble boron compound, e.g., boric acid esters of a polyhydric alcohol such as glycerin or ethylene glycol; a condensation product of sodium naphthalenesulfonate formalin; and the like may also be added. Furthermore, as other additive(s), natural sizing agents such as starch, casein, gelatin, guar gum, gum arabic, and sodium alginate; processed natural sizing agents such as carboxymethylcellulose, starch oxide, and methylcellulose; and the like may be added. These may be used alone of one type, or together in two or more types.

EXAMPLES

Hereinafter, the present invention is specifically explained by way of Examples, but the present invention is not in any way limited to these Examples. It is to be noted that in the following Examples and Comparative Examples, "part(s)" and "%" are on mass basis, unless otherwise specified particularly. Each measuring method and evaluation method adopted in the following Examples and Comparative Examples is indicated below.

Viscosity-Average Degree of Polymerization

The viscosity-average degree of polymerization of the PVA was determined according to JIS K6726: 1994. Specifically, the PVA was saponified until the degree of saponification became 99.5 mol% or more, and after being purified: in regard to the PVA including the structural unit derived from the monomer (a), a limiting viscosity[η] (unit: liter/g) was measured in an aqueous sodium chloride solution (0.5 mol/L) at 30 °C; and in regard to the PVA not including the structural unit derived from the monomer (a), a limiting viscosity [η] (unit: liter/g) was measured in an aqueous solution at 30 °C. From this limiting viscosity [η], the viscosity-average degree of polymerization (P) of the PVA was determined according to the following equality.

$$P = ([\eta] \times 10^4/8.29)^{(1/0.62)}$$

Degree of Saponification

The degree of saponification of each PVA was determined according to a method described in JIS K6726: 1994.

Degree of Modification

The degree of modification of the PVA (a percentage content of the structural unit derived from the monomer (a) in the PVA) was determined according to a method employing $^1$H-NMR, using a vinyl ester polymer that is a precursor of the PVA.

For example, when monomethyl maleate is used as the monomer (a), the degree of modification may be determined according to the following procedure. More specifically, by using n-hexane/acetone as a solvent, the vinyl ester polymer that is the precursor of the PVA is reprecipitated and purified sufficiently at least three times, and thereafter the purified material thus obtained is dried at 70 °C for 1 day to produce a sample for analysis. The sample is dissolved in $CDCl_3$, and the measurement is carried out with $^1$H-NMR at room temperature. The degree of modification (the percentage content S of the structural unit derived from the monomer (a)) can be calculated from a peak $\alpha$ (4.7 to 5.2 ppm) derived from a methine structure of the vinyl ester unit in the vinyl ester polymer, and a peak $\beta$ (3.6 to 3.8 ppm) derived from the methyl group of the methyl ester moiety of the structural unit derived from the monomer (a), according to the following equation:

$$S \text{ (mol\%)} = \{(\text{number of protons of } \beta/\, 3)/ (\text{number of proton of } \alpha + (\text{number of proton of } \beta/\, 3))\} \times 100.$$

Degree of Branching

First, with hexafluoroisopropanol as a mobile phase, gel permeation chromatography (GPC) measurement was performed by using a differential refractive index detector, a light scattering detector, and a viscosity detector to determine intrinsic viscosity on each absolute molecular weight of 200,000 or more and 800,000 or less of: the PVA (branched PVA) as a subject of the measurement; and the linear PVA that serves as a corresponding standard. It is to be noted that the linear PVA used was an unmodified PVA having a viscosity of a 4% by mass aqueous solution falling within $\pm 20\%$, and a degree of saponification falling within $\pm 3$ mol%, of the PVA as the subject of the measurement.

Specific measurement conditions of GPC are as shown below.

solvent: hexafluoroisopropanol (containing sodium trifluoroacetate at a concentration of 20 mmol/L)
column: Shodex, FIP-806M $\times$ 2, and HFIP-LG $\times$ 1
column temperature: 40 °C
flow rate: 1.0 mL/min
sample concentration: 0.1 mass/vol%
amount of injection: 100 $\mu$L
authentic sample:

  for relative molecular weight: polymethyl methacrylate
  for absolute molecular weight: polymethyl methacrylate

Using the intrinsic viscosity$[\eta]_{branch}$ of the PVA as the subject of the measurement and the intrinsic viscosity$[\eta]_{linear}$ of the linear PVA, on each absolute molecular weight measured, the degree of branching $g_m$ on each absolute molecular weight was determined according to the above equalities (1) and (2). The smallest degree of branching $g_m$ in the range of the absolute molecular weight of 200,000 or more and 800,000 or less was defined as the minimum degree of branching. In addition, the ratio $g_A/g_B$ of the degree of branching of the vinyl alcohol polymer having an absolute molecular weight of 200,000 $g_A$ to the degree of branching of the vinyl alcohol polymer having an absolute molecular weight of 800,000 $g_B$ was determined.

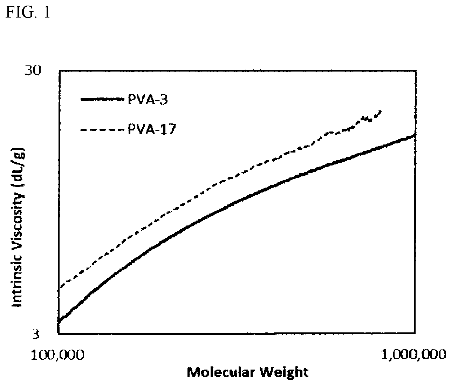

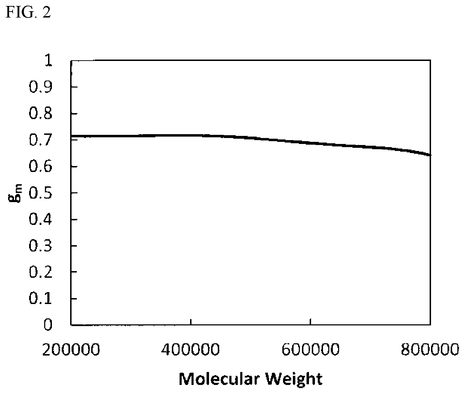

As one example of the measurement results, the result of PVA-3 is shown in FIGs. 1 and 2. FIG. 1 is a graph (Mark-Houwink plot) in which the absolute molecular weight and the intrinsic viscosity ($[\eta]_{branch}$ or $[\eta]_{linear}$) of: PVA-3 as the subject of the measurement; and PVA-17 that is a corresponding linear PVA are plotted. FIG. 2 is a graph in which the degree of branching ($g_m$) on each absolute molecular weight of PVA-3 determined according the above equalities (1) and (2), based on the results shown in FIG. 1 as described above is plotted.

Particle Size Distribution

Particle size distribution of PVA powder was measured by a dry sieve procedure disclosed in JIS Z8815: 1994. Using each sieve having a mesh opening size of 1.00 mm, 500 $\mu$m, or 180 $\mu$m: a proportion of the mass (percentage content: % by mass) of the powder capable of passing through a sieve having a mesh opening size of 1.00 mm; a proportion of the mass (percentage content: % by mass) of the powder capable of passing through a sieve having a mesh opening size of 500 $\mu$m, and a proportion of the mass (percentage content: % by mass) of the powder capable of passing through a sieve having a mesh opening size of 180 $\mu$m, with respect to the mass of the PVA powder before being sieved were determined, respectively. It is to be noted that the mesh opening size conforms to nominal mesh opening size W in accordance with JIS Z8801-1-2006.

Insoluble Matter

In a water bath preset at 60 °C, a 500 mL flask attached with a stirrer was provided, and 288 g of distilled water was charged into this flask and stirring was started at 300 rpm. 12 g of the PVA powder was weighed and this PVA powder was gradually charged into the flask. The PVA powder was charged in the total amount (12 g), and the stirring was continued for 60 min to give a PVA solution. Thereafter, using the PVA solution thus obtained, particles (undissolved particles) remaining without being dissolved were filtered with a metal filter having a mesh opening size of 63 $\mu$m. Then, the filter was sufficiently washed with warm water at 30 °C, and the solution attached to the filter was removed to leave only the undissolved particles on the filter. Thereafter, the filter was dried by a heating dryer at 120 °C for 1 hour. The mass of the filter after drying was compared with the mass of the filter before being used in filtration, whereby the mass of the undissolved particles was calculated. The mass of the undissolved particles with respect to the PVA powder (12 g) used was employed for the proportion (ppm) of the insoluble matter contained.

First Normal Stress Difference

An aqueous PVA solution was prepared, and a first normal stress difference of the aqueous PVA solution when subjected to shearing was measured. A procedure of preparing the aqueous PVA solution is as in the following. To 10 parts by mass of the PVA were added 90 parts by mass of water, and the temperature of a resultant mixture was elevated to 90 °C with stirring, followed by cooling after 1 hour. A flow curve measurement was performed using a rheometer, and the first normal stress difference was determined. In addition, an unmodified PVA, being the same as the unmodified PVA used in the GPC measurement, was selected as an unmodified PVA that serves as a standard. The first normal stress difference was similarly determined for the unmodified PVA.

Specific measurement conditions for first normal stress difference determination are as shown below.

measurement apparatus: MCR rheometer 102 (Anton Paar GmbH)
jig: parallel plates (diameter: 25 mm)
gap between plates: 0.05 mm
range of shearing speed: $10^{-2}$ to $10^5 s^{-1}$
measurement temperature: 20 °C

A ratio, at a shearing speed of $10^5 s^{-1}$, of the first normal stress difference of the unmodified aqueous PVA solution, serving as the standard, to the first normal stress difference of the aqueous PVA solution to be determined (first normal stress difference of unmodified PVA serving as standard / PVA of Example or Comparative Example) was calculated, and an evaluation was performed in accordance with the following criteria.

A: more than 4.0
B: more than 2.0 and 4.0 or less
C: more than 1.5 and 2.0 or less
D: more than 1.2 and 1.5 or less
E: 1.2 or less

Spattering

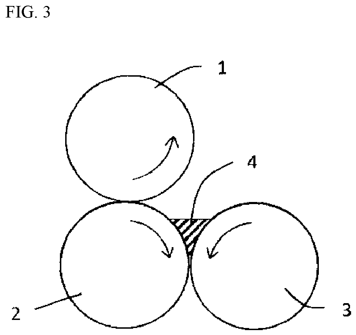

To 95 parts by mass of water, 5 parts by mass of each PVA were added to prepare an aqueous PVA solution having a concentration of 5% by mass by the same procedure as described above, and this was employed as a coating liquid. Using three rolls, 1 to 3, shown in FIG. 3, the following evaluation was performed. A surface temperature of the rolls 1 to 3 was adjusted to 30 °C. The coating liquid 4 thus prepared was added between the roll 2 and the roll 3, and an evaluation in accordance with the following criteria was performed by visual inspection to determine whether drops of the coating liquid 4 (aqueous solution) spattered from between the roll 1 and the roll 2 upon performing rotation such that a surface speed of the roll 1 was 300 m/min.

    A: no drops spattered at all
    B: a small number of drops spattered
    C: a large number of drops spattered

Coating Unevenness

Aqueous PVA solutions each having a concentration of 5% by mass were produced by the same procedure as above, and were employed as coating liquids. Using an experimental Symsizer apparatus (manufactured by Kumagai Riki Kogyo Co., Ltd.), the coating liquid was applied at a speed of 300 m/min to a sheet of paper having a basis weight of 70 g/m$^2$. The paper, thus coated, was dried for 5 min using a hot air dryer at 100 °C. A coated paper thus obtained was subjected to moisture conditioning at 20 °C and 65% RH for 72 hrs. The coated paper after the moisture conditioning was cut to a size of 1 cm vertically and 2 cm horizontally, 1 drop of a 1/200 normality aqueous iodine solution was added dropwise, and a surface of the coating paper was observed. Of the surface of the coated paper, a site having the coating liquid thereon is dyed indigo, and a site on which the coating liquid not having the coating liquid thereon is dyed purplish red. Based on this difference, evaluations on coating unevenness were performed in accordance with the following criteria.

    A: uniform
    B: uneven in some parts
    C: uneven over whole area

Coating Defects

Using a pilot curtain coater, a coating agent was applied to base paper at an amount of 10 g/m$^2$ and a coating speed of 600 m/min to produce a coated paper. Furthermore, the coating speed condition was changed (800 m/min, 1,000 m/min, 1,200 m/min, 1,400 m/min, 1,600 m/min) and other conditions were kept the same to produce coated papers.

The coated papers produced at the coating speeds of 600 m/min to 1,600 m/min were soaked in a 2% aqueous solution of ammonium chloride, heating was conducted at 200 °C for 3 min to turn fibers of the paper brown, observation was conducted at 50x magnification with an optical microscope, and a state of coating defects was observed. A case in which there were no coating defects was assessed as "A", and a case in which coating defects had occurred was assessed as "B".

Air Resistance of Coated Paper

The air resistance of the coated papers produced at the speed of 1,000 m/min in the above-described coating defect evaluation was measured with an Oken-type air permeability tester in accordance with JIS P 8117: 2009.

Viscosity of Aqueous Adhesive

With regard to each aqueous adhesive, a BH-type viscometer ("BII-type viscometer" from Toki Sangyo Co., Ltd) was used, and viscosity under conditions involving 30 °C and 2 rpm, and viscosity under conditions involving 30 °C and 20 rpm were measured.

Roll Coating Characteristics

Each aqueous adhesive was subjected to the following evaluation using the three rolls 1 to 3 shown in FIG. 3. A surface temperature of the rolls was adjusted to 30 °C. The aqueous adhesive thus prepared was added between the roll 2 and the roll 3, and rotation was performed such that the surface speed of the roll 1 was 100 m/min.

Splashing

An evaluation in accordance with the following criteria was performed by visual inspection to determine whether drops of the aqueous adhesive spattered (jumping phenomenon) from between the roll 1 and the roll 2.

    A: no drops spattered at all

B: a small number of drops spattered
C: a large number of drops spattered

Liquid Film Streaks on Roll

A state of liquid film streak occurrence on the roll 1 was observed by visual inspection and assessed in accordance with the following criteria. The liquid film streaks occurring on the roll 1 are reflected in coating streaks on the coated article.

A: no liquid film streaks observed on the roll
B: liquid film streaks observed on a part of the roll
C: liquid film streaks observed over an entire surface of the roll

Example 1: Production of PVA-1

Into a reactor equipped with a stirrer, a reflux condenser, a nitrogen inlet tube, a comonomer dripping port and a polymerization initiator addition port, 700 parts by mass of vinyl acetate and 1,050 parts by mass of methanol were charged, and nitrogen substitution in the system was carried out for 30 min while bubbling nitrogen. Further, monomethyl maleate was used as the monomer (a), and nitrogen substitution in a methanol solution of monomethyl maleate (concentration: 10%) was carried out by bubbling nitrogen gas. Elevation of the temperature in the reactor was started, and when the internal temperature became 60 °C, 0.84 parts by mass of 2,2'-azobisisobutyronitrile (AIBN) were added thereto to start the polymerization. To the reactor was added the methanol solution of monomethyl maleate dropwise, and the polymerization was allowed at 60 °C for 5 hours while the monomer composition ratio in the polymerization solution was maintained to be constant. Thereafter, the mixture was cooled to stop the polymerization. The total amount of the monomer (a) added until the polymerization was stopped was 12.1 parts by mass, and the solid content concentration when the polymerization was stopped was 23.6%, with the rate of polymerization being 60%. Subsequently, unreacted monomers were removed while adding methanol at intervals at 30 °C under a reduced pressure to obtain a methanol solution of the vinyl ester polymer (concentration: 36.7%). Next, to 569.2 parts by mass of the methanol solution of the vinyl ester polymer (the polymer in the solution: 150.0 parts by mass) prepared by further adding methanol to this methanol solution, 6.28 parts by mass of a 10% methanol solution of sodium hydroxide and water were added such that the moisture content in the system became 1%, and saponification was allowed at 40 °C (the polymer concentration of the saponification solution: 25%; the molar ratio of sodium hydroxide to the vinyl acetate unit in the polymer: 0.009; and the moisture content: 1%). Since a gelatinous material was produced in about 10 min after the addition of the methanol solution of sodium hydroxide, this gelatinous matter was ground with a grinder and further left to stand at 40 °C for 1 hour to allow the saponification to proceed, and thereafter 600 parts by mass of methyl acetate were added to neutralize remaining alkali. After completion of neutralization was ascertained by using a phenolphthalein indicator, the mixture was filtered off to obtain a white solid. To this white solid were added 600 parts by mass of methanol, and the mixture was left to stand at 40 °C for 30 min to permit washing. After the washing operation was performed twice, a white solid obtained by deliquoring through centrifugation was subjected to preliminary drying overnight. Thereafter, while the fine powder was eliminated, a heat treatment was carried out at 120 °C for 6 hours with a dryer to give PVA (PVA-1) powder. Physical properties and the results of the evaluations of PVA-1 are shown in Tables 2 to 4.

Examples 2 to 10 and Comparative Examples 2 and 4: Production of PVA-2 to PVA-10, PVA-12, and PVA-14

Each PVA (PVA-2 to PVA-10, PVA-12, and PVA-14) powder of Examples 2 to 10 and Comparative Examples 2 and 4 was obtained by a method similar to that in Example 1 except that: polymerization conditions such as the amount of vinyl acetate and methanol used, and the type and the amount of the monomer (a) used; saponification conditions such as the concentration of the vinyl ester polymer and the molar ratio of sodium hydroxide to the vinyl acetate unit in the saponification; and the heat treatment conditions were each changed as shown in Table 1. Physical properties and the results of the evaluations of these PVAs are shown in Tables 2 to 4.

Comparative Example 1: Production of PVA-11

A PVA (PVA-11) powder of Comparative Example 1 was obtained by a method similar to that in Example 3 except that fine powder was not eliminated during the heat treatment. Physical properties and the results of the evaluations of this PVA are shown in Tables 2 to 4.

Comparative Example 3: Production of PVA-13

Into a reactor equipped with a stirrer, a reflux condenser, a nitrogen inlet tube, a comonomer dripping port, and a polymerization initiator addition port, 920 parts by mass of vinyl acetate and 80 parts by mass of methanol were charged, and nitrogen substitution in the system was carried out for 30 min while bubbling nitrogen. Elevation of the temperature in the reactor was started, and when the internal temperature became 60 °C, 0.25 parts by mass of 2,2'-azobisisobutyronitrile (AIBN) were added thereto to start the polymerization. The polymerization was allowed at 60 °C for 3 hours, and thereafter, the mixture was cooled to stop the polymerization. The solid content concentration when the polymerization was stopped was 9.0%, with the rate of polymerization being 25%. Subsequently, unreacted monomers were removed while adding methanol at intervals at 30 °C under a reduced pressure to obtain a methanol solution of the vinyl ester polymer (concentration: 25.3%). Next, to 724.07 parts by mass of the methanol solution of the vinyl ester polymer (the polymer in the solution: 150 parts by mass) prepared by further adding methanol to this methanol solution, 6.97 parts by mass of a 10% methanol solution of sodium hydroxide and water were added such that the moisture content in the system became 1%, and saponification was allowed at 40 °C (the polymer concentration of the saponification solution: 20%; the molar ratio of sodium hydroxide to the vinyl acetate unit in the polymer: 0.01; and the moisture content: 1%). Since a gelatinous material was produced in about 10 min after the addition of the methanol solution of sodium hydroxide, this gelatinous matter was ground with a grinder and further left to stand at 40 °C for 1 hour to allow the saponification to proceed, and thereafter 750 parts by mass of methyl acetate were added to neutralize remaining alkali. After completion of neutralization was ascertained by using a phenolphthalein indicator, the mixture was filtered off to obtain a white solid. To this white solid were added 750 parts by mass of methanol, and the mixture was left to stand at 40 °C for 3 hrs to permit washing. After the washing operation was performed three times, a white solid obtained by deliquoring through centrifugation was subjected to vacuum drying at 40 °C overnight. Thereafter, while the fine powder was eliminated, a heat treatment was carried out at 120 °C for 4.5 hours with a dryer to give PVA (PVA-13) powder. Physical properties and the results of the evaluations of PVA-13 are shown in Tables 2 to 4.

Synthesis Examples 1 to 8: Production of PVA-15 to PVA-22

Powders of unmodified PVAs (PVA-15 to PVA-22) serving as standards for measurement of the degree of branching and evaluation of the first normal stress difference were obtained by a method similar to that in Comparative Example 3, except that: polymerization conditions such as usage amounts of vinyl acetate and methanol; saponification conditions such as a concentration of the vinyl ester polymer in the saponification and a molar ratio of sodium hydroxide to the vinyl acetate unit; and heating conditions were changed as shown in Table 1. It is to be noted that the PVA-15 corresponds to the PVA-1, the PVA-16 corresponds to the PVA-2, the PVA-17 corresponds to the PVA-3, 8, 10, and 11, the PVA-18 corresponds to the PVA-4, the PVA-19 corresponds to the PVA-5 and 9, the PVA-20 corresponds to the PVA-6, the PVA-21 corresponds to the PVA-7, and the PVA-22 corresponds to the PVA-12 and 14.

Table 1

| | | Usage Amount | | | | | Rate of polymerization (%) | Saponification conditions | | | Heat treatment conditions | |
| --- | --- | --- | --- | --- | --- | --- | --- | --- | --- | --- | --- | --- |
| | | vinyl acetate (parts by mass) | methanol (parts by mass) | monomer (a) | | AIBN (parts by mass) | | vinyl ester poly-mer concentra-tion (%) | NaOH molar ra-tio | moisture content (%) | temperature (°C) | time period (hrs) |
| | | | | type | usage amount (parts by mass) | | | | | | | |
| Example 1 | PVA-1 | 700 | 1,050 | monomethyl maleate | 12.1 | 0.84 | 60 | 25 | 0.009 | 1 | 120 | 6 |
| Example 2 | PVA-2 | 1,180 | 400 | monomethyl maleate | 0.44 | 0.023 | 39 | 25 | 0.008 | 1 | 110 | 5 |
| Example 3 | PVA-3 | 920 | 80 | monomethyl maleate | 0.6 | 0.25 | 25 | 20 | 0.010 | 1 | 120 | 4.5 |
| Example 4 | PVA-4 | 300 | 1,400 | monomethyl maleate | 12.6 | 0.5 | 50 | 30 | 0.010 | 1 | 120 | 4.5 |
| Example 5 | PVA-5 | 1,400 | 30 | monomethyl maleate | 0.18 | 0.01 | 10 | 10 | 0.010 | 1 | 120 | 4.5 |
| Example 6 | PVA-6 | 920 | 80 | monomethyl maleate | 0.6 | 0.25 | 25 | 20 | 0.006 | 1 | 120 | 4.5 |
| Example 7 | PVA-7 | 920 | 80 | monomethyl maleate | 0.6 | 0.25 | 25 | 20 | 0.020 | 1 | 120 | 4.5 |
| Example 8 | PVA-8 | 920 | 80 | monomethyl maleate | 1.2 | 0.25 | 25 | 20 | 0.010 | 1 | 120 | 3 |
| Example 9 | PVA-9 | 920 | 80 | dimethyl maleate | 0.6 | 0.25 | 25 | 20 | 0.010 | 1 | 120 | 4.5 |
| Example 10 | PVA-10 | 920 | 80 | monomethyl fumarate | 0.6 | 0.25 | 25 | 20 | 0.010 | 1 | 120 | 4.5 |
| Comparative Example 1 | PVA-11 | 920 | 80 | monomethyl maleate | 0.6 | 0.25 | 25 | 20 | 0.010 | 1 | 120 | 4.5 |
| Comparative Example 2 | PVA-12 | 920 | 80 | monomethyl maleate | 0.6 | 0.25 | 25 | 20 | 0.010 | 1 | 120 | 0.4 |

| | | Usage Amount | | | | | Rate of polymerization (%) | Saponification conditions | | | Heat treatment conditions | |
|---|---|---|---|---|---|---|---|---|---|---|---|---|
| | | vinyl acetate (parts by mass) | methanol (parts by mass) | monomer (a) | | AIBN (parts by mass) | | vinyl ester poly-mer concentra-tion (%) | NaOH molar ra-tio | moisture content (%) | temperature (°C) | time period (hrs) |
| | | | | type | usage amount (parts by mass) | | | | | | | |
| Comparative Example 3 | PVA-13 | 920 | 80 | - | 0 | 0.25 | 25 | 20 | 0.010 | 1 | 120 | 4.5 |
| Comparative Example 4 | PVA-14 | 920 | 80 | monomethyl maleate | 1.2 | 0.25 | 25 | 20 | 0.010 | 1 | 105 | 6 |
| Synthesis Example 1 | PVA-15 | 700 | 800 | - | 0 | 0.1 | 30 | 25 | 0.009 | 1 | - | - |
| Synthesis Example 2 | PVA-16 | 2,300 | 300 | - | 0 | 0.1 | 25 | 25 | 0.008 | 1 | - | - |
| Synthesis Example 3 | PVA-17 | 1,400 | 50 | - | 0 | 0.01 | 10 | 20 | 0.010 | 1 | - | - |
| Synthesis Example 4 | PVA-18 | 400 | 1,000 | - | 0 | 1 | 70 | 30 | 0.010 | 1 | - | - |
| Synthesis Example 5 | PVA-19 | 1,600 | 30 | - | 0 | 0.01 | 8 | 10 | 0.010 | 1 | - | - |
| Synthesis Example 6 | PVA-20 | 1,400 | 100 | - | 0 | 0.05 | 8 | 20 | 0.006 | 1 | - | - |
| Synthesis Example 7 | PVA-21 | 920 | 80 | - | 0 | 0.05 | 20 | 20 | 0.020 | 1 | - | - |
| Synthesis Example 8 | PVA-22 | 930 | 70 | - | 0 | 0.05 | 20 | 20 | 0.010 | 1 | - | - |

Table 2

| | | Viscosity-average degree of polymerization: P | Degree of modification: S (mol%) | Degree of saponification (mol%) | S × P |
|---|---|---|---|---|---|
| Example 1 | PVA-1 | 420 | 1.9 | 88 | 798 |
| Example 2 | PVA-2 | 1,700 | 0.3 | 88 | 425 |
| Example 3 | PVA-3 | 3,500 | 0.2 | 88 | 700 |
| Example 4 | PVA-4 | 200 | 5.0 | 88 | 1,000 |
| Example 5 | PVA-5 | 5,000 | 0.1 | 88 | 500 |
| Example 6 | PVA-6 | 3,500 | 0.2 | 80 | 700 |
| Example 7 | PVA-7 | 3,500 | 0.2 | 95 | 700 |
| Example 8 | PVA-8 | 3,500 | 0.4 | 88 | 1,400 |
| Example 9 | PVA-9 | 3,500 | 0.2 | 88 | 700 |
| Example 10 | PVA-10 | 3,500 | 0.2 | 88 | 700 |
| Comparative Example 1 | PVA-11 | 3,500 | 0.2 | 88 | 700 |
| Comparative Example 2 | PVA-12 | 3,500 | 0.2 | 88 | 700 |
| Comparative Example 3 | PVA-13 | 3,500 | 0.0 | 88 | 0 |
| Comparative Example 4 | PVA-14 | 3,500 | 0.4 | 88 | 1,400 |
| Synthesis Example 1 | PVA-15 | 800 | 0 | 88 | 0 |
| Synthesis Example 2 | PVA-16 | 2,400 | 0 | 88 | 0 |
| Synthesis Example 3 | PVA-17 | 4,500 | 0 | 88 | 0 |
| Synthesis Example 4 | PVA-18 | 300 | 0 | 88 | 0 |
| Synthesis Example 5 | PVA-19 | 5,100 | 0 | 88 | 0 |
| Synthesis Example 6 | PVA-20 | 5,000 | 0 | 80 | 0 |
| Synthesis Example 7 | PVA-21 | 4,000 | 0 | 95 | 0 |

(continued)

| | | Viscosity-average degree of polymerization: P | Degree of modification: S (mol%) | Degree of saponification (mol%) | S × P |
|---|---|---|---|---|---|
| Synthesis Example 8 | PVA-22 | 3,800 | 0 | 88 | 0 |

Table 3

| | | Minimum degree of branching | $g_A/g_B$ | Insoluble content (ppm) | Particle size distribution | | |
|---|---|---|---|---|---|---|---|
| | | | | | passage through sieve with mesh opening size 180 μm (% by mass) | passage through sieve with mesh opening size 1.00 mm (% by mass) | passage through sieve with mesh opening size 500 μm (% by mass) |
| Example 1 | PVA-1 | 0.22 | 2.59 | 700 | 3.4 | 99.6 | 45.0 |
| Example 2 | PVA-2 | 0.82 | 1.08 | 300 | 8.1 | 99.8 | 50.0 |
| Example 3 | PVA-3 | 0.65 | 1.12 | 1,100 | 11.6 | 99.2 | 40.3 |
| Example 4 | PVA-4 | 0.10 | 4.20 | 1,800 | 3.5 | 99.5 | 41.5 |
| Example 5 | PVA-5 | 0.88 | 1.09 | 500 | 6.5 | 99.6 | 44.0 |
| Example 6 | PVA-6 | 0.40 | 1.60 | 1,510 | 6.5 | 99.8 | 52.0 |
| Example 7 | PVA-7 | 0.90 | 1.11 | 1,650 | 8.8 | 99.1 | 47.0 |
| Example 8 | PVA-8 | 0.70 | 1.77 | 1,300 | 5.7 | 99.1 | 49.5 |
| Example 9 | PVA-9 | 0.33 | 2.14 | 1,730 | 4.9 | 99.3 | 43.2 |
| Example 10 | PVA-10 | 0.62 | 1.15 | 1,200 | 2.1 | 99.5 | 46.0 |
| Comparative Example 1 | PVA-11 | 0.60 | 3.12 | 4,500 | 24.3 | 99.2 | 44.0 |
| Comparative Example 2 | PVA-12 | 0.98 | 1.01 | 200 | 8.3 | 99.5 | 48.5 |
| Comparative Example 3 | PVA-13 | - | - | 550 | 6.7 | 99.4 | 38.5 |
| Comparative Example 4 | PVA-14 | 0.95 | 1.01 | 130 | 7.2 | 99.7 | 52.0 |

Table 4

|  |  | First normal stress difference | Spattering | Coating unevenness |
|---|---|---|---|---|
| Example 1 | PVA-1 | A | A | B |
| Example 2 | PVA-2 | B | A | A |
| Example 3 | PVA-3 | C | B | A |
| Example 4 | PVA-4 | A | B | B |
| Example 5 | PVA-5 | C | B | B |
| Example 6 | PVA-6 | A | A | B |
| Example 7 | PVA-7 | C | B | B |
| Example 8 | PVA-8 | B | A | A |
| Example 9 | PVA-9 | A | B | A |
| Example 10 | PVA-10 | C | B | A |
| Comparative Example 1 | PVA-11 | B | C | C |
| Comparative Example 2 | PVA-12 | E | C | C |
| Comparative Example 3 | PVA-13 | E | C | C |
| Comparative Example 4 | PVA-14 | D | C | C |

As shown in Table 4, it is revealed that each of the PVAs of Examples 1 to 10, in which the minimum degree of branching was 0.93 or less and the insoluble content was less than 2,000 ppm, resulted in spattering and coating unevenness being inhibited, thereby indicating the coating characteristics being favorable. Furthermore, in the case in which the minimum degree of branching was 0.93 or less, the first normal stress difference was evaluated as A to C, and in the case in which the minimum degree of branching was 0.50 or less, the first normal stress difference was evaluated as A, revealing that when the minimum degree of branching becomes low, the first normal stress difference becomes sufficiently low in comparison to the unmodified PVA serving as the standard. Furthermore, in the PVA-2, 3, and 8 to 10, in which the degree of polymerization was 500 or more, the minimum degree of branching was 0.85 or less, the insoluble content was less than 1,750 ppm, and the degree of saponification was 85 mol% or more, the coating unevenness was assessed as A, revealing that coating unevenness is particularly decreased.

On the other hand, the PVA-11 of Comparative Example 1 has abundant fine powder, and consequently, the insoluble content increased, and spattering and coating unevenness occurred. In the PVA-12 to 14 of Comparative Examples 2 to 4, branching structures were not sufficiently formed or structural units derived from the monomer (a) were not contained and branching was not formed even if a heat treatment was conducted; thus, inhibiting spattering and coating unevenness failed.

Example 11: Production of Coating Agent

To 350 parts by mass of a calcium carbonate slurry ("Carbital 97", manufactured by Imerys: solid content of 75% by mass) were added 200 parts by mass of water. To this slurry were further added 100 parts by mass of a styrene-butadiene copolymer latex ("Styronal BN4606", manufactured by BASF: solid content of 50% by mass), and stirring was conducted for 20 min to produce a mixed slurry. Furthermore, 90 parts by mass of water with respect to 10 parts by mass of the PVA-1 were added, the temperature was elevated to 90 °C while stirring, and then cooling was performed after 1 hour to produce an aqueous PVA solution. To the mixed slurry produced as described above were added 20 parts by mass of the aqueous PVA solution produced, 40 parts by mass of water were further added, and stirring was conducted for 20 min to produce the coating agent of Example 11, having a viscosity at 20 °C and 60 rpm of about 1,000 cps. In accordance with the methods described above, the coating agent was evaluated on the coating defects, and the air resistance of the coated paper obtained was measured. The results are shown in Table 5.

Examples 12 to 20 and Comparative Examples 5 to 8: Produce of Coating Agent

Coating agents of each of Examples 12 to 20 and each of Comparative Examples 5 to 8 were produced using, instead of the PVA-1, each PVA shown in Table 5. Each coating agent obtained was evaluated on the coating defects, and the air resistance of each coated paper obtained was measured. The results are shown in Table 5. It is to be noted that in production of each coating agent, the coating agent was produced by appropriately adjusting the concentration of the aqueous PVA solution and the blending proportion of the mixed slurry and the aqueous PVA solution such that the viscosity of each PVA at 20 °C and 60 rpm was about 1,000 cps.

Table 5

| | | Coating defects | | | | | | Air resistance (sec) |
|---|---|---|---|---|---|---|---|---|
| | | 600 m/min | 800 m/min | 1,000 m/min | 1,200 m/min | 1,400 m/min | 1,600 m/min | |
| Example 11 | PVA-1 | A | A | A | A | A | B | 1,260 |
| Example 12 | PVA-2 | A | A | A | A | A | A | 1,560 |
| Example 13 | PVA-3 | A | A | A | A | B | B | 1,780 |
| Example 14 | PVA-4 | A | A | A | B | B | B | 1,130 |
| Example 15 | PVA-5 | A | A | A | B | B | B | 1,870 |
| Example 16 | PVA-6 | A | A | A | A | A | B | 2,030 |
| Example 17 | PVA-7 | A | A | A | B | B | B | 1,620 |
| Example 18 | PVA-8 | A | A | A | A | A | A | 2,140 |
| Example 19 | PVA-9 | A | A | A | A | B | B | 1,980 |
| Example 20 | PVA-10 | A | A | A | A | B | B | 1,750 |
| Comparative Example 5 | PVA-11 | A | B | B | B | B | B | 630 |
| Comparative Example 6 | PVA-12 | A | A | B | B | B | B | 860 |
| Comparative Example 7 | PVA-13 | A | B | B | B | B | B | 780 |
| Comparative Example 8 | PVA-14 | A | A | B | B | B | B | 950 |

As shown in Table 5, in each of the coating agents of Examples 11 to 20, coating defects did not occur even at the coating speed of 1,000 m/min, whereby the coating characteristics were favorable. Furthermore, each of the coated papers (coated articles) obtained using each of the coating agents of Examples 11 to 20 had air resistance exceeding 1,000 sec, indicating superior gas barrier properties.

Example 21

Production of aqueous emulsion Em-1

Into a 1 L glass polymerization container equipped with a reflux condenser, a dropping funnel, a thermometer, and a nitrogen blowing port was charged 232 g of ion exchanged water, and the temperature was elevated to 95 °C. The PVA-1 was added at a content of 27.2 g, and stirring was performed for 45 min to permit dissolution. Furthermore, sodium acetate was added at a content of 0.27 g and mixed to permit dissolution. Next, after the aqueous solution in which the PVA-1 was dissolved was cooled and substituted with nitrogen, the temperature was elevated to 85 °C while stirring at 200 rpm. Thereafter, 29.8 g of a 1% by mass aqueous ammonium persulfate solution and 8.29 g of a 1% by mass aqueous sodium bicarbonate solution were added. Over 3 hours, 272 g of vinyl acetate and 29.8 g of a 1% by mass aqueous ammonium persulfate solution were continuously added, and then a polymerization temperature was maintained at 90 °C and the polymerization was concluded, whereby an aqueous polyvinyl acetate emulsion (Em-1) of Example 21 was obtained. In Example 21, an amount of addition of the PVA-1 with respect to 100 parts by mass of vinyl acetate during emulsion polymerization was 10 parts by mass.

Production of aqueous adhesive

To the aqueous emulsion Em-1 (100 parts by mass) of Example 21 thus obtained were added, at room temperature, 2.5 parts by mass of 2.2.4-trimethyl-1.3-pentanediol monoisobutyrate (product name "CS-12", manufactured by Chisso Corporation) as a plasticizer, and an appropriate amount of water to give an aqueous adhesive of Example 21, having a solid content concentration of 50% by mass. The viscosity and the roll coating characteristics (splashing and liquid film streaks) of the aqueous adhesive obtained were evaluated in accordance with the methods described above. The results are shown in Table 6.

Examples 22 to 29 and Comparative Examples 9 to 12

Production of aqueous emulsions Em-2 to Em-14

Aqueous emulsions Em-2 to Em-14 of Examples 22 to 29 and Comparative Examples 9 to 12 were obtained similarly to Example 21, except that: instead of the PVA-1, each PVA shown in Table 6 was used in a predetermined amount; and the plasticizer was used in an amount shown in Table 6.

Production of aqueous adhesives

Aqueous adhesives of Examples 22 to 29 and Comparative Examples 9 to 12, having the solid content concentrations shown in Table 6, were obtained similarly to Example 21, except that instead of the aqueous emulsion Em-1, each aqueous emulsion shown in Table 6 was used. The viscosity and the roll coating characteristics (splashing and liquid film streaks) of the aqueous adhesives obtained were evaluated in accordance with the methods described above. The results are shown in Table 6.

Table 6

| | Aqueous adhesive | | | | | | Solid content concentration | Viscosity (mPa·s) | | Roll coating characteristics | |
|---|---|---|---|---|---|---|---|---|---|---|---|
| | aqueous emulsion | | | | plasticizer | | | | | | |
| | | stabilizer | | content (parts by mass) | | content (parts by mass) | (% by mass) | 2 rpm | 20 rpm | splashing | liquid film streaks |
| | type | type | added amount* (parts by mass) | | type | | | | | | |
| Example 21 | Em-1 | PVA-1 | 10 | 100 | CS-12 | 2.5 | 50 | 8,200 | 4,580 | A | B |
| Example 22 | Em-2 | PVA-2 | 7.5 | 100 | CS-12 | 2.3 | 45 | 28,600 | 15,300 | A | A |
| Example 23 | Em-3 | PVA-3 | 5.0 | 100 | CS-12 | 2.0 | 40 | 29,000 | 15,080 | B | A |
| Example 24 | Em-5 | PVA-5 | 5.0 | 100 | CS-12 | 1.8 | 35 | 46,800 | 24,100 | B | B |
| Example 25 | Em-6 | PVA-6 | 5.0 | 100 | CS-12 | 1.8 | 35 | 41,560 | 16,800 | A | B |
| Example 26 | Em-7 | PVA-7 | 5.0 | 100 | CS-12 | 2.0 | 40 | 15,700 | 11,200 | B | B |
| Example 27 | Em-8 | PVA-8 | 5.0 | 100 | CS-12 | 2.0 | 40 | 30,050 | 16,120 | A | A |
| Example 28 | Em-9 | PVA-9 | 5.0 | 100 | CS-12 | 2.0 | 40 | 31,000 | 14,920 | B | A |
| Example 29 | Em-10 | PVA-10 | 5.0 | 100 | CS-12 | 2.0 | 40 | 30,200 | 15,100 | B | A |
| Comparative Example 9 | Em-11 | PVA-11 | 5.0 | 100 | CS-12 | 2.0 | 40 | 30,100 | 15,080 | C | C |
| Comparative Example 10 | Em-12 | PVA-12 | 5.0 | 100 | CS-12 | 2.0 | 40 | 30,180 | 15,080 | C | C |

29

(continued)

| | Aqueous adhesive | | | | | | | Solid content concentration | Viscosity (mPa s) | | Roll coating characteristics | |
|---|---|---|---|---|---|---|---|---|---|---|---|---|
| | aqueous emulsion | | | | plasticizer | | | | | | | |
| | | stabilizer | | content (parts by mass) | | | | | | | | |
| | type | type | added amount* (parts by mass) | | type | content (parts by mass) | | (% by mass) | 2 rpm | 20 rpm | splashing | liquid film streaks |
| Compara tive Example 11 | Em-1 3 | PVA-1 3 | 5.0 | 100 | CS-1 2 | 2.0 | | 40 | 29,900 | 14,7 00 | C | C |
| Compara tive Example 12 | Em-1 4 | PVA-1 4 | 5.0 | 100 | CS-1 2 | 2.0 | | 40 | 33,000 | 16,1 00 | C | C |

\* Amount of addition with respect to 100 parts by mass of vinyl acetate during emulsion polymerization

As shown in Table 6, the aqueous adhesives of Examples 21 to 29 resulted in less splashing during roll coating, and fewer liquid film streaks.

[INDUSTRIAL AVAELABLITY]

The PVA of the present invention can be used for various types of intended usages such as coating agents, adhesives, film materials, and the like.

[Explanation of the Reference Symbols]

> 1, 2, 3 Roll
> 4 Coating liquid or aqueous adhesive

**Claims**

1. A vinyl alcohol polymer comprising a structural unit derived from at least one selected from the group consisting of: a monomer comprising a carboxy group; and a derivative of the monomer, wherein

   the vinyl alcohol polymer has a minimum degree of branching of 0.93 or less within a range of an absolute molecular weight being 200,000 or more and 800,000 or less, and
   an insoluble content of a mixture prepared by adding 4 parts by mass of the vinyl alcohol polymer to 96 parts by mass of water followed by stirring at 60 °C for 1 hour is 0.1 ppm or more and less than 2,000 ppm.

2. The vinyl alcohol polymer according to claim 1, wherein a viscosity-average degree of polymerization is 300 or more and 5,000 or less.

3. The vinyl alcohol polymer according to claim 1 or 2, wherein the at least one selected from the group consisting of: a monomer comprising a carboxy group; and a derivative of the monomer is at least one selected from the group consisting of an ethylenic unsaturated dicarboxylic acid, a monoester of an ethylenic unsaturated dicarboxylic acid, a diester of an ethylenic unsaturated dicarboxylic acid, and an anhydride of an ethylenic unsaturated dicarboxylic acid.

4. The vinyl alcohol polymer according to claim 1 or 2, wherein the at least one selected from the group consisting of: a monomer comprising a carboxy group; and a derivative of the monomer is at least one selected from the group consisting of maleic acid, a maleic acid monoalkyl ester, a maleic acid dialkyl ester, maleic anhydride, fumaric acid, a fumaric acid monoalkyl ester, and a fumaric acid dialkyl ester.

5. The vinyl alcohol polymer according to any one of claims 1 to 4, which satisfies the following inequality (I):

$$S \times P > 250 \qquad (I)$$

   wherein, in the inequality (I),
   S represents a percentage content (mol%), with respect to total structural units, of the structural unit derived from at least one selected from the group consisting of: the monomer comprising a carboxy group; and the derivative of the monomer; and
   P represents the viscosity-average degree of polymerization.

6. The vinyl alcohol polymer according to any one of claims 1 to 5, which satisfies the following inequality (II):

$$1.0 < g_A/g_B < 3.0 \qquad (II)$$

   wherein, in the inequality (II), $g_A$ represents a degree of branching of the vinyl alcohol polymer having an absolute molecular weight of 200,000; and
   $g_B$ represents a degree of branching of the vinyl alcohol polymer having an absolute molecular weight of 800,000.

7. The vinyl alcohol polymer according to any one of claims 1 to 6, wherein a degree of saponification is 65 mol% or more and 99 mol% or less.

8. A powder comprising the vinyl alcohol polymer according to any one of claims 1 to 7.

9. The powder according to claim 8, wherein a percentage content of the powder capable of passing through a sieve having a mesh opening size of 180 $\mu$m is 12% by mass or less.

10. The powder according to claim 8 or 9, wherein

    a percentage content of the powder capable of passing through a sieve having a mesh opening size of 1.00 mm is 97% by mass or more, and
    a percentage content of the powder capable of passing through a sieve having a mesh opening size of 500 $\mu$m is 40% by mass or more.

11. A method for producing a powder comprising a vinyl alcohol polymer, the method comprising:

    a step (1) of obtaining a copolymer of a vinyl ester with at least one selected from the group consisting of: a monomer comprising a carboxy group; and a derivative of the monomer;
    a step (2) of obtaining a saponification product of the copolymer; and
    a step (3) of subjecting the saponification product to a heat treatment, wherein
    in the saponification product upon completion of the step (3), a percentage content of the powder capable of passing through a sieve having a mesh opening size of 180 $\mu$m is 12% by mass or less.

12. The method for producing a powder according to claim 11, wherein, in the step (3), a heat treatment temperature is 110 °C or more, and a heat treatment time period is 1 hour or more.

13. A coating agent comprising the vinyl alcohol polymer according to any one of claims 1 to 7.

14. A coated article comprising: a base; and the coating agent according to claim 13 applied on the base.

15. The coated article according to claim 14, which is a thermosensitive recording material.

16. The coated article according to claim 14, which is a base paper for a release paper.

17. The coated article according to claim 14, which is an oil-resistant paper.

18. The coated article according to claim 14, which is an inkjet recording material.

19. The coated article according to claim 14, which is a gas barrier paper or a flavor barrier paper.

20. The coated article according to claim 14, which is a white paperboard.

21. A method for producing a coated article, the method comprising applying the coating agent according to claim 13 on a base by using a curtain coater.

22. A stabilizer for emulsion polymerization, the stabilizer comprising the vinyl alcohol polymer according to any one of claims 1 to 7.

23. An aqueous emulsion comprising: the stabilizer for emulsion polymerization according to claim 22; and a polymer comprising an ethylenic unsaturated monomer unit.

24. An adhesive comprising the aqueous emulsion according to claim 23.

FIG. 1

FIG. 2

FIG. 3

## INTERNATIONAL SEARCH REPORT

| | International application No. |
|---|---|
| | **PCT/JP2022/018771** |

### A. CLASSIFICATION OF SUBJECT MATTER

*C08F 8/12*(2006.01)i; *C08F 16/06*(2006.01)i
FI: C08F8/12; C08F16/06

According to International Patent Classification (IPC) or to both national classification and IPC

### B. FIELDS SEARCHED

Minimum documentation searched (classification system followed by classification symbols)

C08F8/12; C08F16/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/009178 A1 (KURARAY CO., LTD.) 09 January 2020 (2020-01-09) claims, paragraphs [0025], [0036], examples | 1-8, 10, 13-24 |
| A | WO 2018/061272 A1 (KURARAY CO., LTD.) 05 April 2018 (2018-04-05) claims, examples | 1-10, 13-24 |
| A | JP 2019-105008 A (KURARAY CO., LTD.) 27 June 2019 (2019-06-27) claims, examples | 1-10, 13-24 |
| A | JP 09-316272 A (KURARAY CO., LTD.) 09 December 1997 (1997-12-09) claims, examples | 1-10, 13-24 |
| P, A | JP 2021-098802 A (KURARAY CO., LTD.) 01 July 2021 (2021-07-01) claims, examples | 1-10, 13-24 |
| P, A | JP 2021-098801 A (KURARAY CO., LTD.) 01 July 2021 (2021-07-01) claims, examples | 1-10, 13-24 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 July 2022** | **19 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/018771**

| Box No. III | Observations where unity of invention is lacking (Continuation of item 3 of first sheet) |
|---|---|

This International Searching Authority found multiple inventions in this international application, as follows:

The invention in claim 1 shares, with the invention in claim 11, the common technical features of: a vinyl alcohol-based polymer that includes a structural unit derived from at least one selected from the group consisting of a monomer having a carboxy group and a derivative thereof; and a production method therefor.

However, said technical features do not make a contribution over the prior art in light of the disclosure of document 2 (WO 2018/061272 A1 (in particular, claims, examples, etc.)), which is a prior art document, and thus cannot be said to be special technical features. Moreover, there are no other same or corresponding special technical features between both inventions.

Accordingly, the both inventions cannot be considered to be a group of inventions linked so as to form a single general inventive concept under PCT Rule 13.1, and thus do not comply with the requirement of unity of invention.

Therefore, the claims include the following two inventions.

(Invention 1) Invention in claims 1-10 and 13-24
(Invention 2) Invention in claims 11-12

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-10 and 13-24**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/018771**

| Patent document cited in search report | | | Publication date (day/month/year) | Patent family member(s) | | | Publication date (day/month/year) |
|---|---|---|---|---|---|---|---|
| WO | 2020/009178 | A1 | 09 January 2020 | US | 2021/0261704 | A1 | |
| | | | | claims, paragraphs [0030]-[0044], [0055]-[0070], examples | | | |
| | | | | EP | 3819316 | A1 | |
| | | | | CN | 112334498 | A | |
| WO | 2018/061272 | A1 | 05 April 2018 | US | 2019/0300693 | A1 | |
| | | | | claims, examples | | | |
| | | | | EP | 3521327 | A1 | |
| | | | | CN | 109790254 | A | |
| JP | 2019-105008 | A | 27 June 2019 | (Family: none) | | | |
| JP | 09-316272 | A | 09 December 1997 | US | 5811488 | A | |
| | | | | claims, examples | | | |
| | | | | EP | 810254 | A1 | |
| | | | | KR | 10-1997-0074803 | A | |
| JP | 2021-098802 | A | 01 July 2021 | (Family: none) | | | |
| JP | 2021-098801 | A | 01 July 2021 | (Family: none) | | | |

Form PCT/ISA/210 (patent family annex) (January 2015)

**EP 4 332 126 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018061272 A

- JP H10265754 A